# EUROPÄISCHE PATENTSCHRIFT

(11) **EP 3 738 411 B1**
(45) Veröffentlichungstag und Bekanntmachung des Hinweises auf die Patenterteilung: **09.11.2022**
(21) Anmeldenummer: 18826801.5
(22) Anmeldetag: 27.11.2018
(51) Int. Cl.: H05B 6/12

(54) **KOCHFELDVORRICHTUNG**
HOB DEVICE
SYSTÈME DE TABLE DE CUISSON

(30) Priorität: 08.01.2018 ES 201830010
(43) Veröffentlichungstag der Anmeldung: 18.11.2020
(73) Patentinhaber: BSH Hausgeräte GmbH, 81739 München (DE)
(72) Erfinder: AZUARA GAZO, Jesus Enrique, 50021 Zaragoza (ES); FUERTES PINOL, Clara, 50019 Zaragoza (ES); GIL CABREJAS, Javier, 50011 Zaragoza (ES); HERRERA RODRIGUEZ, Javier, 50009 Zaragoza (ES); ORTIZ SAINZ, David, 50298 Pinseque (Zaragoza) (ES); ROMEO VELILLA, Rosario, 50008 Zaragoza (ES); VALENCIA BETRAN, María, 50010 Zaragoza (ES)
(86) Internationale Anmeldenummer: PCT/IB2018/059325
(87) Internationale Veröffentlichungsnummer: WO 2019/135120

(56) Entgegenhaltungen:
- EP-A1- 3 104 664
- EP-A2- 1 317 164
- DE-A1-102014 223 711
- JP-A- 2009 218 040
- JP-A- 2009 218 106
- JP-A- 2017 033 951

## Beschreibung

Die Erfindung betrifft eine Kochfeldvorrichtung nach Anspruch 1 und ein Verfahren zu einem Betrieb einer Kochfeldvorrichtung nach Anspruch 14.

Aus der internationalen Patentanmeldung WO 2017/093850 A1 ist bereits eine Kochfeldvorrichtung bekannt, welche eine als Kochfeldplatte ausgebildete Aufstellplatte und acht Heizeinheiten aufweist, welche in einer Einbaulage unterhalb der Kochfeldplatte angeordnet sind. Die Kochfeldvorrichtung weist mehrere Beleuchtungsstreifen auf. Jeweils zwei Beleuchtungsstreifen sind einer einzigen Heizeinheit zugeordnet. Hierbei sind die der Heizeinheit zugeordneten Beleuchtungstreifen bezüglich einer Querrichtung auf einander gegenüberliegenden Seiten der Heizeinheit angeordnet. Die Beleuchtungsstreifen zeigen in einem Betriebszustand mittels einer sich in einer Tiefenrichtung verändernden Intensität von in der Tiefenrichtung benachbarten Beleuchtungsstreifen eine Veränderung einer Heizleistung von in der Tiefenrichtung benachbarten Heizeinheiten an.

Aus der internationalen Patentanmeldung WO 2017/093850 A1 ist bereits eine Kochfeldvorrichtung bekannt, welche eine als Kochfeldplatte ausgebildete Aufstellplatte und drei Heizeinheiten aufweist. Die Kochfeldvorrichtung weist zudem drei Beleuchtungseinheiten auf, welche jeweils drei Leuchteinheiten aufweisen, die als einzelne Leuchtquellen ausgebildet sind und sich demnach von einem Leuchtstreifen unterscheiden. Zueinander benachbarte Leuchteinheiten weisen einen Abstand von mindestens 40 mm

JP2009218040A offenbart eine Kochfeldvorrichtung gemäß des Oberbegriffs von Anspruch 1.

Die Aufgabe der Erfindung besteht insbesondere darin, eine gattungsgemäße Vorrichtung mit verbesserten Eigenschaften hinsichtlich einer Beleuchtung bereitzustellen. Die Aufgabe wird erfindungsgemäß durch die Merkmale der Ansprüche 1 und 15 gelöst, während vorteilhafte Ausgestaltungen und Weiterbildungen der Erfindung den Unteransprüchen entnommen werden können.

Die Erfindung geht aus von einer Kochfeldvorrichtung, insbesondere von einer Induktionskochfeldvorrichtung, mit zumindest einer Aufstellplatte, welche zu einem Aufstellen wenigstens eines Gargeschirrs vorgesehen ist, mit zumindest zwei Heizeinheiten zu einer Beheizung des Gargeschirrs und mit zumindest einem insbesondere dynamischen Beleuchtungsstreifen, welcher insbesondere eine Hauptfunktion in Form einer Beleuchtung und/oder in Form einer Ausgabe zumindest einer Information aufweist.

Es wird vorgeschlagen, dass der Beleuchtungsstreifen zumindest eine Leuchteinheit aufweist und in wenigstens einem Betriebszustand zu einer Markierung der zumindest zwei Heizeinheiten den zumindest zwei Heizeinheiten zugeordnet ist, wobei der Beleuchtungsstreifen in wenigstens einem Betriebszustand bezüglich zumindest einer Richtung zumindest eine sich in der Richtung verändernde Heizleistung anzeigt.

Durch die erfindungsgemäße Ausgestaltung können insbesondere besonders vorteilhafte Beleuchtungseigenschaften erreicht werden. Insbesondere kann eine Beleuchtung flexibel an die zumindest zwei Heizeinheiten, insbesondere an einen Aktivitätsstatus der zumindest zwei Heizeinheiten, angepasst werden. Es kann insbesondere eine geringe Lagerhaltung und/oder eine geringe Anzahl an Baueinheiten ermöglicht werden, wodurch insbesondere eine einfache und/oder schnelle Montage ermöglicht werden kann. Insbesondere kann ein Ausgabebereich, welcher normalerweise auf eine Bedienerschnittstelle beschränkt ist, ausgedehnt werden, wodurch mittels des Beleuchtungsstreifens ausgegebene Informationen insbesondere einfach durch einen Bediener erkennbar sind, was insbesondere aus einer Größe des Ausgabebereichs und/oder aus einer Nähe des Ausgabebereichs zu dem Gargeschirr erreicht werden kann.

Unter einer "Kochfeldvorrichtung", insbesondere unter einer "Induktionskochfeldvorrichtung", soll insbesondere zumindest ein Teil, insbesondere eine Unterbaugruppe, eines Kochfelds, insbesondere eines Induktionskochfelds, verstanden werden.

Unter einer "Aufstellplatte" soll insbesondere zumindest eine insbesondere plattenartige Einheit verstanden werden, welche zu einem Aufstellen wenigstens eines Gargeschirrs und/oder zu einem Auflegen wenigstens eines Garguts zum Zweck der Beheizung vorgesehen ist. Die Aufstellplatte könnte beispielsweise als ein Teilbereich zumindest einer Arbeitsplatte, insbesondere zumindest einer Küchenarbeitsplatte, insbesondere eines Garsystems, ausgebildet sein. Alternativ oder zusätzlich könnte die Aufstellplatte als eine Kochfeldplatte ausgebildet sein. Die als Kochfeldplatte ausgebildete Aufstellplatte könnte insbesondere zumindest einen Teil eines Kochfeldaußengehäuses ausbilden und insbesondere gemeinsam mit zumindest einer Außengehäuseeinheit, mit welcher die als Kochfeldplatte ausgebildete Aufstellplatte in wenigstens einem montierten Zustand insbesondere verbunden sein könnte, das Kochfeldaußengehäuse wenigstens zu einem Großteil ausbilden. Die Aufstellplatte könnte beispielsweise wenigstens zu einem Großteil aus Glas und/oder aus Glaskeramik und/oder aus Neolith und/oder aus Dekton und/oder aus Holz und/oder aus Marmor und/oder aus Stein, insbesondere aus Naturstein, und/oder aus Schichtstoff und/oder aus Metall und/oder aus Kunststoff und/oder aus Keramik gebildet sein. Unter "wenigstens zu einem Großteil" soll insbesondere zu einem Anteil, insbesondere einem Massenanteil und/oder Volumenanteil, von mindestens 70 %, insbesondere von mindestens 80 %, vorteilhaft von mindestens 90 % und vorzugsweise von mindestens 95 % verstanden werden.

Unter einer "Heizeinheit" soll in diesem Zusammenhang insbesondere eine Einheit verstanden werden, welche dazu vorgesehen ist, in wenigstens einem Betriebszustand zumindest einem Gargeschirr Energie zum Zweck einer Beheizung des Gargeschirrs zuzuführen. Beispielsweise könnte die Heizeinheit als Widerstandsheizeinheit ausgebildet sein und insbesondere dazu vorgesehen sein, Energie in Wärme umzuwandeln und diese dem Gargeschirr zum Zweck einer Beheizung des Gargeschirrs zuzuführen. Alternativ oder zusätzlich könnte die Heizeinheit als Induktionsheizeinheit ausgebildet sein und insbesondere dazu vorgesehen sein, Energie in Form eines elektromagnetischen Wechselfelds dem Gargeschirr zuzuführen, wobei die dem Gargeschirr zugeführte Energie insbesondere in dem Gargeschirr in Wärme umgewandelt werden könnte. In wenigstens einem Betriebszustand führt die Heizeinheit insbesondere dem Gargeschirr Energie zu, und zwar insbesondere zu einer Beheizung und/oder Erwärmung des Gargeschirrs. Insbesondere weist die Kochfeldvorrichtung zumindest drei, insbesondere zumindest vier, vorteilhaft zumindest sechs, besonders vorteilhaft acht und vorzugsweise eine Vielzahl an Heizeinheiten auf. Insbesondere definieren die Heizeinheiten, insbesondere der Kochfeldvorrichtung, zumindest einen variablen Kochflächenbereich und sind insbesondere matrixartig angeordnet.

Unter einem "Beleuchtungsstreifen" soll eine Einheit verstanden werden, welche eine längliche Gestalt aufweist und welche in wenigstens einem Betriebszustand insbesondere eine wenigstens im Wesentlichen kontinuierliche Beleuchtung bereitstellt. Der Beleuchtungsstreifen unterscheidet sich insbesondere von zumindest einem Display. Insbesondere zeigt der Beleuchtungsstreifen die Erstreckung der zumindest zwei Heizeinheiten im realen Raum an, was sich insbesondere von einer virtuellen Darstellung einer Erstreckung, wie beispielsweise in einem Display, unterscheidet. Der Beleuchtungsstreifen ist in wenigstens einem Betriebszustand insbesondere beabstandet zu zumindest einer Bedienerschnittstelle angeordnet, welche insbesondere zumindest ein Display zu einer Ausgabe wenigstens eines Betriebsparameters aufweisen könnte. Insbesondere weist die Kochfeldvorrichtung zumindest eine Bedienerschnittstelle auf, welche insbesondere zu einer Eingabe und/oder zu einer Ausgabe wenigstens eines Betriebsparameters vorgesehen ist. Der Beleuchtungsstreifen weist insbesondere eine Hauptfunktion in Form einer Beleuchtung und/oder einer Ausgabe zumindest einer Information auf und ist insbesondere von einem Bedienstreifen der Bedienerschnittstelle verschieden ausgebildet, dessen Hauptfunktion insbesondere eine Bedienung und/oder eine Eingabe zumindest einer Information und/oder zumindest einer Bedienanweisung ist. Insbesondere ist der Beleuchtungsstreifen frei von Sensorelementen, welche insbesondere zu einer Detektion zumindest einer Bedieneingabe vorgesehen sind. Durch die getrennte Ausbildung von Beleuchtungsstreifen und Bedienerschnittstelle kann vorteilhaft eine hohe Flexibilität und/oder eine hohe Gestaltungsfreiheit hinsichtlich einer Anordnung des Beleuchtungsstreifens ermöglicht werden. Insbesondere kann der Beleuchtungsstreifen in einem Nahbereich der Heizeinheiten und/oder in einem Bereich erhöhter Temperatur angeordnet werden, und zwar insbesondere unter Vermeidung eines Risikos einer Fehleingabe mittels der Bedienerschnittstelle und/oder unter Vermeidung eines Risikos einer Fehldetektion einer Bedienungsanweisung.

Unter einer "länglichen" Gestalt eines Objekts soll insbesondere eine Gestalt verstanden werden, bei welcher eine Längserstreckung des Objekts mindestens dreimal, insbesondere mindestens fünfmal, vorteilhaft mindestens siebenmal, besonders vorteilhaft mindestens zehnmal und vorzugsweise mindestens fünfzehnmal so groß ist wie senkrecht zu der Längserstreckung ausgerichtete Erstreckungen des Objekts. Unter einer "Längserstreckung" eines Objekts soll insbesondere eine Erstreckung des Objekts entlang einer Längserstreckungsrichtung des Objekts verstanden werden. Unter einer "Längserstreckungsrichtung" eines Objekts soll insbesondere eine Richtung verstanden werden, welche parallel zu einer längsten Seite eines kleinsten gedachten geometrischen Quaders ausgerichtet ist, welcher das Objekt gerade noch vollständig umschließt. Unter einer "Erstreckung" eines Objekts soll insbesondere ein maximaler Abstand zweier Punkte einer senkrechten Projektion des Objekts auf eine Ebene verstanden werden.

Unter einer "wenigstens im Wesentlichen kontinuierlichen" Beleuchtung soll insbesondere eine kontinuierliche Beleuchtung und/oder eine durch eine Vielzahl an Leuchteinheiten bereitgestellte Beleuchtung verstanden werden, bei welcher zueinander, insbesondere direkt, benachbarte Leuchteinheiten einen Abstand von maximal 35 mm, insbesondere von maximal 30 mm, vorteilhaft von maximal 25 mm, besonders vorteilhaft von maximal 20 mm, vorzugsweise von maximal 15 mm und besonders bevorzugt von maximal 10 mm aufweisen. Beispielsweise könnte der Beleuchtungsstreifen eine, insbesondere einzige, Leuchtquelle aufweisen, welche in wenigstens einem Betriebszustand insbesondere eine wenigstens im Wesentlichen kontinuierliche Beleuchtung bereitstellt und insbesondere als Leuchtröhre, vorteilhaft als Leuchtstoffröhre, ausgebildet sein könnte. Der Beleuchtungsstreifen könnte alternativ oder zusätzlich zumindest zwei, insbesondere zumindest drei, vorteilhaft zumindest vier und vorzugsweise eine Vielzahl an Leuchteinheiten aufweisen, welche jeweils als Leuchtröhre ausgebildet sein könnten und welche einen Abstand von maximal 35 mm, insbesondere von maximal 30 mm, vorteilhaft von maximal 25 mm, besonders vorteilhaft von maximal 20 mm, vorzugsweise von maximal 15 mm und besonders bevorzugt von maximal 10 mm aufweisen könnten. Alternativ oder zusätzlich könnte der Beleuchtungsstreifen eine Vielzahl an Leuchteinheiten aufweisen, welche in wenigstens einem Betriebszustand insbesondere eine wenigstens im Wesentlichen kontinuierliche Beleuchtung bereitstellen könnten und bei welchen insbesondere zueinander, insbesondere direkt, benachbarte Leuchteinheiten einen Abstand von maximal 35 mm, insbesondere von maximal 30 mm, vorteilhaft von maximal 25 mm, besonders vorteilhaft von maximal 20 mm, vorzugsweise von maximal 15 mm und besonders bevorzugt von maximal 10 mm aufweisen könnten.

Unter einer "Leuchteinheit" soll insbesondere eine Einheit verstanden werden, welche in wenigstens einem Betriebszustand elektromagnetische Strahlung, insbesondere in Form von sichtbarem Licht, emittiert und/oder bereitstellt. Insbesondere weist die Leuchteinheit zumindest eine Lichtquelle auf. Beispielsweise könnte die Leuchteinheit insbesondere genau eine Lichtquelle, wie beispielsweise zumindest eine Leuchtröhre, insbesondere zumindest eine Leuchtstoffröhre, aufweisen. Die Leuchteinheit könnte alternativ oder zusätzlich insbesondere zumindest zwei, vorteilhaft zumindest drei, besonders vorteilhaft zumindest vier und vorzugsweise eine Vielzahl an Lichtquellen aufweisen. Beispielsweise könnten die Lichtquellen jeweils als eine LED ausgebildet sein und insbesondere eine gemeinsame Montageeinheit ausbilden und/oder innerhalb einer gemeinsamen Leuchteinheitengehäuseeinheit angeordnet sein.

Unter einer "Vielzahl" soll insbesondere eine Anzahl von mindestens fünf, insbesondere von mindestens sechs, vorteilhaft von mindestens acht, besonders voreilhaft von mindestens zehn, vorzugsweise von mindestens zwölf und besonders bevorzugt von mindestens fünfzehn verstanden werden. Insbesondere weist der Beleuchtungsstreifen eine Vielzahl an Leuchteinheiten auf, welche insbesondere in einer Längserstreckungsrichtung des Beleuchtungsstreifens, insbesondere wenigstens im Wesentlichen gleichmäßig, verteilt angeordnet sind. Der Beleuchtungsstreifen liegt in einer Einbaulage insbesondere an einer Rückseite der Aufstellplatte an, welche insbesondere als eine einem Bediener in einer Einbaulage abgewandte Seite der Aufstellplatte ausgebildet ist. Die Aufstellplatte weist insbesondere zumindest einen Oberflächenteilbereich auf, zu dessen Beleuchtung der Beleuchtungsstreifen insbesondere vorgesehen ist. Insbesondere beleuchtet der Beleuchtungsstreifen in wenigstens einem Betriebszustand den Oberflächenteilbereich und liegt insbesondere an einem dem Oberflächenteilbereich gegenüberliegenden Teilbereich einer Rückseite der Aufstellplatte an der Rückseite der Aufstellplatte an.

Unter einem "dynamischen" Beleuchtungsstreifen soll insbesondere ein Beleuchtungsstreifen verstanden werden, welcher in wenigstens einem Betriebszustand dazu vorgesehen ist, zumindest eine Markierungseigenschaft, insbesondere in Abhängigkeit einer Ansteuerung des Beleuchtungsstreifens durch zumindest eine Steuereinheit, vorteilhaft bewusst zu verändern. Die bewusste Veränderung einer Markierungseigenschaft unterscheidet sich insbesondere von einer Veränderung der Markierungseigenschaft, welche durch eine Temperatureinwirkung und/oder durch eine Abnutzung und/oder durch einen Verschleiß eintritt. Unter einer "Markierungseigenschaft" soll insbesondere eine Eigenschaft einer tatsächlichen Markierung verstanden werden. Die Markierungseigenschaft ist in wenigstens einem Betriebsmodus insbesondere dauerhaft für einen Bediener sichtbar. Die Markierungseigenschaft könnte insbesondere eine Beleuchtungseigenschaft sein. Insbesondere könnte die Markierung eine Beleuchtung sein. Beispielsweise könnte die Kochfeldvorrichtung, insbesondere zusätzlich zu dem dynamischen Beleuchtungsstreifen, zumindest einen statischen Beleuchtungsstreifen aufweisen, welcher zu einer Markierung der zumindest zwei Heizeinheiten vorgesehen sein könnte. Der statische Beleuchtungsstreifen könnte beispielsweise eine in eine Oberfläche der Aufstellplatte eingebrachte Markierung der zumindest zwei Heizeinheiten sein.

Insbesondere weist die Kochfeldvorrichtung zumindest eine Steuereinheit auf, welche insbesondere zumindest zu einer Steuerung und/oder zu einem Betrieb des Beleuchtungsstreifens vorgesehen ist. Unter einer "Steuereinheit" soll insbesondere eine elektronische Einheit verstanden werden, die vorzugsweise in einer Steuer- und/oder Regeleinheit eines Kochfelds, insbesondere eines Induktionskochfelds, zumindest teilweise integriert ist und die vorzugsweise dazu vorgesehen ist, zumindest den Beleuchtungsstreifen und/oder die Heizeinheiten zu steuern und/oder zu regeln. Vorzugsweise umfasst die Steuereinheit eine Recheneinheit und insbesondere zusätzlich zur Recheneinheit eine Speichereinheit mit einem darin gespeicherten Steuer- und/oder Regelprogramm, das dazu vorgesehen ist, von der Recheneinheit ausgeführt zu werden. Insbesondere ist die Steuereinheit dazu vorgesehen, im Fall eines aufgestellten Gargeschirrs aus den Heizeinheiten zumindest eine Heizzone zu einer Beheizung des aufgestellten Gargeschirrs zu bilden. Die Steuereinheit ist insbesondere zu einer Ansteuerung des Beleuchtungsstreifens vorgesehen.

Der Beleuchtungsstreifen weist insbesondere zumindest eine Beleuchtungssteuereinheit auf, welche insbesondere zu einer Ansteuerung durch die Steuereinheit und/oder zu einer Kommunikation mit der Steuereinheit vorgesehen ist. In wenigstens einem Betriebszustand steuert die Beleuchtungssteuereinheit insbesondere die Leuchteinheit an und steuert und/oder regelt insbesondere von der Leuchteinheit emittiertes Licht. Insbesondere sind die Beleuchtungssteuereinheit und die Steuereinheit, insbesondere räumlich, getrennt voneinander und insbesondere als eigenständige Einheiten angeordnet und/oder ausgebildet. In wenigstens einem Betriebszustand kommunizieren die Beleuchtungssteuereinheit und die Steuereinheit insbesondere miteinander. Insbesondere kann ein Bediener den Beleuchtungsstreifen insbesondere aktivieren und/oder deaktivieren, und zwar insbesondere mittels zumindest einer Bedieneingabe mittels zumindest einer Bedienerschnittstelle. Beispielsweise könnte die Beleuchtungssteuereinheit in wenigstens einem Betriebszustand mit zumindest einer Bedienerschnittstelle, insbesondere der Kochfeldvorrichtung, kommunizieren.

Unter der Wendung, dass der Beleuchtungsstreifen den zumindest zwei Heizeinheiten "zugeordnet" ist, soll insbesondere verstanden werden, dass der Beleuchtungsstreifen in wenigstens einem Betriebszustand die zumindest zwei Heizeinheiten beleuchtet und/oder dass der Beleuchtungsstreifen in wenigstens einem Betriebszustand in einem Nahbereich der zumindest zwei Heizeinheiten angeordnet ist. Der Beleuchtungsstreifen erstreckt sich in wenigstens einem Betriebszustand insbesondere über einen Anteil von mindestens 60 %, insbesondere von mindestens 70 %, vorteilhaft von mindestens 80 %, besonders vorteilhaft von mindestens 90 % und vorzugsweise von mindestens 95 % einer Erstreckung der zumindest zwei Heizeinheiten in wenigstens einer Richtung, in welcher die zumindest zwei Heizeinheiten zueinander benachbart angeordnet sind.

Beispielsweise könnten die zumindest zwei Heizeinheiten in wenigstens einer Querrichtung zueinander benachbart angeordnet sein. Unter einer "Querrichtung" soll insbesondere eine Richtung verstanden werden, welche wenigstens im Wesentlichen parallel zu einer Frontkante der Aufstellplatte ausgerichtet ist. Insbesondere sind die zumindest zwei Heizeinheiten in wenigstens einer Tiefenrichtung zueinander benachbart angeordnet. Unter einer "Tiefenrichtung" soll insbesondere eine Richtung verstanden werden, welche wenigstens im Wesentlichen senkrecht zu einer Frontkante der Aufstellplatte ausgerichtet ist und welche insbesondere von einem einem Bediener zugewandten Bereich in einen einem Bediener abgewandten Bereich weist. Die Querrichtung und die Tiefenrichtung sind insbesondere wenigstens im Wesentlichen senkrecht zueinander und insbesondere wenigstens im Wesentlichen parallel zu einer Haupterstreckungsebene der Aufstellplatte ausgerichtet.

Unter einer "Haupterstreckungsebene" eines Objekts soll insbesondere eine Ebene verstanden werden, welche parallel zu einer größten Seitenfläche eines kleinsten gedachten geometrischen Quaders ist, welcher das Objekt gerade noch vollständig umschließt, und insbesondere durch den Mittelpunkt des Quaders verläuft. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist.

Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

In einem weiteren Aspekt der Erfindung, welcher für sich alleine genommen oder gemeinsam mit anderen Aspekten der Erfindung betrachtet werden kann, wird vorgeschlagen, dass der Beleuchtungsstreifen eine Längserstreckung von mindestens 200 mm, insbesondere von mindestens 250 mm, vorteilhaft von mindestens 300 mm, besonders vorteilhaft von mindestens 350 mm, vorzugsweise von mindestens 400 mm und besonders bevorzugt von mindestens 450 mm aufweist. Dadurch kann insbesondere ein großer Bereich, wie insbesondere ein variabler Kochflächenbereich, mittels des Beleuchtungsstreifens beleuchtet werden, wodurch insbesondere auf weitere Beleuchtungsstreifen verzichtet und/oder eine geringe Lagerhaltung erzielt werden kann.

In einem weiteren Aspekt der Erfindung, welcher für sich alleine genommen oder gemeinsam mit anderen Aspekten der Erfindung betrachtet werden kann, wird vorgeschlagen, dass der Beleuchtungsstreifen zumindest eine Leuchteinheit aufweist und in wenigstens einem Betriebszustand bezüglich zumindest einer Richtung zumindest einen sich in der Richtung verändernden Betriebsparameter anzeigt. Beispielsweise könnte die Richtung wenigstens im Wesentlichen parallel zu der Querrichtung und/oder wenigstens im Wesentlichen senkrecht zu der Tiefenrichtung ausgerichtet sein. Vorteilhaft ist die Richtung wenigstens im Wesentlichen parallel zu der Tiefenrichtung und/oder wenigstens im Wesentlichen senkrecht zu der Querrichtung ausgerichtet. Der Betriebsparameter könnte beispielsweise zumindest eine Temperatur, auf welche ein Gargeschirr insbesondere aufzuheizen ist, und/oder zumindest eine Heizleistung, mittels welcher ein Gargeschirr insbesondere beheizt wird und/oder welche insbesondere eine entsprechende Heizeinheit der zumindest zwei Heizeinheiten in wenigstens einem Betriebszustand bereitstellt, sein. Der Beleuchtungsstreifen könnte den sich in der Richtung verändernden Betriebsparameter insbesondere mittels zumindest einer Änderung einer Intensität und/oder einer Farbe und/oder einer Helligkeit und/oder einer Sättigung anzeigen. Dadurch kann insbesondere ein hoher Bedienkomfort erreicht werden, da ein Bediener den Betriebsparameter insbesondere schnell und einfach erkennen kann.

Zudem wird vorgeschlagen, dass sich der Beleuchtungsstreifen wenigstens im Wesentlichen über eine gesamte Tiefenerstreckung der Aufstellplatte erstreckt. Unter der Wendung, dass sich der Beleuchtungsstreifen "wenigstens im Wesentlichen" über eine gesamte Tiefenerstreckung der Aufstellplatte erstreckt, soll insbesondere verstanden werden, dass sich der Beleuchtungsstreifen über einen Anteil von mindestens 60 %, insbesondere von mindestens 70 %, vorteilhaft von mindestens 80 %, besonders vorteilhaft von mindestens 90 % und vorzugsweise von mindestens 95 % einer Tiefenerstreckung der Aufstellplatte erstreckt. Unter einer "Tiefenerstreckung" eines Objekts soll insbesondere eine Erstreckung des Objekts in Tiefenrichtung verstanden werden. Dadurch kann insbesondere mittels eines einzigen Beleuchtungsstreifens wenigstens im Wesentlichen die gesamte Tiefenerstreckung der Aufstellplatte beleuchtet werden, wodurch insbesondere auf weitere Beleuchtungsstreifen verzichtet und/oder eine geringe Lagerhaltung erzielt werden kann.

Weiterhin wird vorgeschlagen, dass der Beleuchtungsstreifen zumindest eine Gehäuseeinheit aufweist, innerhalb welcher die Leuchteinheit wenigstens zu einem Großteil angeordnet ist. Unter einer "Gehäuseeinheit" soll insbesondere eine Einheit verstanden werden, welche in wenigstens einem montierten Zustand zumindest einen, insbesondere als Hohlraum ausgebildeten Aufnahmeraum zu einer Aufnahme und/oder zu einer Lagerung wenigstens eines Objekts wenigstens teilweise begrenzt und/oder definiert. Das Objekt könnte beispielsweise die Leuchteinheit und/oder zumindest eine Leiterplatte des Beleuchtungsstreifens sein. Insbesondere begrenzen die Gehäuseeinheit und zumindest eine Diffusionseinheit des Beleuchtungsstreifens insbesondere gemeinsam den Aufnahmeraum wenigstens im Wesentlichen. Der Aufnahmeraum ist insbesondere als ein Hohlraum ausgebildet. Die Gehäuseeinheit nimmt in wenigstens einem montierten Zustand insbesondere eine Gewichtskraft von Objekten wenigstens zu einem Großteil auf und/oder überträgt die Gewichtskraft an zumindest eine weitere Einheit, wie beispielsweise an die Aufstellplatte und/oder an eine Kochfeldgehäuseeinheit der Kochfeldvorrichtung. Die Kochfeldvorrichtung weist insbesondere die Kochfeldgehäuseeinheit auf. Dadurch kann die Leuchteinheit insbesondere sicher und/oder geschützt angeordnet werden, wodurch insbesondere eine langlebige Ausgestaltung ermöglicht werden kann.

Der Beleuchtungsstreifen könnte beispielsweise zumindest eine Versorgungseinheit aufweisen, welche in wenigstens einem Betriebszustand die Leuchteinheit mit Energie versorgen und insbesondere in wenigstens einem Betriebszustand wenigstens zu einem Großteil innerhalb der Gehäuseeinheit angeordnet sein könnte. Vorzugsweise weist der Beleuchtungsstreifen zumindest eine Leiterplatte auf, welche wenigstens zu einem Großteil innerhalb der Gehäuseeinheit angeordnet ist und auf welcher die Leuchteinheit angeordnet ist. Unter einer "Leiterplatte" soll insbesondere eine Einheit verstanden werden, welche in wenigstens einem Betriebszustand zumindest eine elektrische und/oder elektronische Baueinheit trägt und welche insbesondere zu einer mechanischen Befestigung und/oder zu einer elektrischen Kontaktierung zumindest einer elektrischen und/oder elektronischen Baueinheit vorgesehen ist. Insbesondere besteht die Leiterplatte wenigstens zu einem Großteil aus elektrisch isolierendem Material. Die Leiterplatte weist insbesondere zumindest eine Leiterbahn und zumindest einen Grundkörper auf, auf welchem die Leiterbahn wenigstens zu einem Großteil angeordnet ist. Dadurch kann insbesondere eine besonders vorteilhafte Beleuchtung erzielt werden. Durch die Anordnung der Leiterplatte innerhalb der Gehäuseeinheit kann die Leiterplatte insbesondere geschützt und/oder in einem Bereich geringer Temperatur und/oder beabstandet zu der Aufstellplatte angeordnet werden, wodurch insbesondere eine langlebige Ausgestaltung erzielt und/oder eine Verwendung kostengünstiger elektronischer und/oder elektrischer Objekte und/oder Leuchteinheiten ermöglicht werden kann.

Zudem wird vorgeschlagen, dass der Beleuchtungsstreifen zumindest eine Diffusionseinheit aufweist, welche zu einer Streuung von durch die Leuchteinheit emittierten Lichts vorgesehen ist. Unter einer "Diffusionseinheit" soll insbesondere eine Einheit verstanden werden, welche dazu vorgesehen ist, einen Anteil von mindestens 75 %, insbesondere von mindestens 80 %, vorteilhaft von mindestens 85 %, besonders vorteilhaft von mindestens 90 % und vorzugsweise von mindestens 95 % von auf einer ersten Seite auftreffendem Licht auf eine der ersten Seite gegenüberliegende zweite Seite zu transmittieren und eine Richtung dieses Anteils des Lichts insbesondere zu verändern. Die Diffusionseinheit ist insbesondere dazu vorgesehen, einen Anteil von maximal 10 %, insbesondere von maximal 8 %, vorteilhaft von maximal 5 %, besonders vorteilhaft von maximal 3 % und vorzugsweise von maximal 1 % von auf einer ersten Seite auftreffendem Licht auf eine der ersten Seite gegenüberliegende zweite Seite zu transmittieren und diesen Anteil des Lichts insbesondere unverändert passieren zu lassen. Die Diffusionseinheit weist vorteilhaft eine wenigstens im Wesentlichen plattenförmige Gestalt auf, wodurch die Diffusionseinheit insbesondere besonders einfach und/oder kostengünstig hergestellt werden kann und/oder wodurch insbesondere eine besonders kompakte Ausgestaltung erzielt werden kann. Insbesondere weist die Diffusionseinheit zumindest eine Längserstreckung und insbesondere zumindest eine insbesondere zu der Längserstreckung senkrecht ausgerichtete Quererstreckung auf, welche insbesondere wesentlich größer sind als eine Dicke der Diffusionseinheit. Insbesondere sind die Längserstreckung der Diffusionseinheit und insbesondere zusätzlich die Quererstreckung der Diffusionseinheit parallel zu einer Haupterstreckungsebene der Diffusionseinheit ausgerichtet. Beispielsweise könnte die Diffusionseinheit wenigstens zu einem Großteil aus Glas und/oder aus Glaskeramik und/oder aus Kunststoff und/oder aus Silikon bestehen. Dadurch kann insbesondere eine besonders homogene Beleuchtung bereitgestellt werden, wodurch insbesondere ein hoher Bedienkomfort für einen Bediener erreicht werden kann. Es kann insbesondere eine aus einzelnen Pixeln und/oder Leuchtpunkten bestehende Beleuchtung vermieden und/oder ein vorteilhaft durchgängiges Kontinuum einer Beleuchtung bereitgestellt werden.

Beispielsweise könnte die Diffusionseinheit an der Aufstellplatte angeordnet sein und insbesondere als eine Schicht ausgebildet sein, wie beispielsweise als eine Beschichtung und/oder als eine Lackierung und/oder als eine Folie. Die Diffusionseinheit könnte insbesondere stoffschlüssig mit der Aufstellplatte, insbesondere mit einer Rückseite der Aufstellplatte, verbunden sein. Vorzugsweise ist die Diffusionseinheit an der Gehäuseeinheit angeordnet. Beispielsweise könnte die Diffusionseinheit auf und/oder an einer Oberfläche der Gehäuseeinheit angeordnet sein. Alternativ oder zusätzlich könnte die Diffusionseinheit wenigstens teilweise und insbesondere wenigstens zu einem Großteil innerhalb der Gehäuseeinheit angeordnet sein. In wenigstens einem Betriebszustand trägt die Gehäuseeinheit insbesondere die Diffusionseinheit und nimmt insbesondere in wenigstens einem Betriebszustand eine Gewichtskraft der Diffusionseinheit wenigstens zu einem Großteil auf und/oder überträgt die Gewichtskraft an zumindest eine weitere Einheit, wie beispielsweise an die Aufstellplatte und/oder an eine Kochfeldgehäuseeinheit der Kochfeldvorrichtung. Dadurch kann insbesondere ein kompakter Beleuchtungsstreifen bereitgestellt werden, welcher insbesondere als eine Vormontageeinheit ausgebildet sein und/oder montiert werden kann.

Ferner wird vorgeschlagen, dass der Beleuchtungsstreifen zumindest eine Dichtungseinheit aufweist, welche zu einer Abdichtung zumindest eines Leuchtbereichs zwischen der Gehäuseeinheit und der Aufstellplatte vorgesehen ist. In wenigstens einem Betriebszustand dichtet die Dichtungseinheit zumindest einen Leuchtbereich zwischen der Gehäuseeinheit und der Aufstellplatte wenigstens im Wesentlichen ab. Die Dichtungseinheit besteht insbesondere wenigstens zu einem Großteil aus elastischem Material, wie beispielsweise aus Silikon und/oder Kunststoff und/oder Gummi. Insbesondere weist die Dichtungseinheit eine Temperaturbeständigkeit von mindestens 120°C, insbesondere von mindestens 150°C, vorteilhaft von mindestens 180°C, besonders vorteilhaft von mindestens 200°C und vorzugsweise von mindestens 220°C auf. Die Kochfeldvorrichtung weist insbesondere den Leuchtbereich auf. Insbesondere definiert der Beleuchtungsstreifen, insbesondere die Gehäuseeinheit und/oder die Dichtungseinheit des Beleuchtungsstreifens, den Leuchtbereich wenigstens teilweise. Insbesondere definiert die Aufstellplatte den Leuchtbereich wenigstens teilweise. Insbesondere definieren der Beleuchtungsstreifen, insbesondere die Gehäuseeinheit und/oder die Dichtungseinheit des Beleuchtungsstreifens, und die Aufstellplatte den Leuchtbereich gemeinsam. Der Leuchtbereich ist in wenigstens einem Betriebszustand, insbesondere räumlich und vorteilhaft bezüglich zumindest einer Vertikalrichtung, insbesondere zwischen der Gehäuseeinheit und der Aufstellplatte angeordnet und insbesondere wenigstens zu einem Großteil von der Dichtungseinheit umschlossen. Unter einer "Vertikalrichtung" soll insbesondere eine Richtung verstanden werden, welche in wenigstens einem Betriebszustand wenigstens im Wesentlichen senkrecht zu einer Haupterstreckungsebene der Aufstellplatte ausgerichtet ist. Die Dichtungseinheit liegt in wenigstens einem Betriebszustand insbesondere formschlüssig an der Aufstellplatte an und wird insbesondere gegen die Aufstellplatte gedrückt. In wenigstens einem Betriebszustand liegt die Dichtungseinheit insbesondere an der Aufstellplatte, insbesondere an einer Unterseite der Aufstellplatte, an und reduziert insbesondere einen auf die Aufstellplatte ausgeübten Druck, und zwar insbesondere in einem Vergleich zu einer Ausgestaltung unter Vermeidung einer Dichtungseinheit und/oder zu einer Ausgestaltung mit einer wenigstens im Wesentlichen steifen Dichtungseinheit. Dadurch kann insbesondere ein Eindringen von Fremdkörpern, wie beispielsweise Verschmutzungen und/oder Staub und/oder bei einer Montage bewegliche Objekte, in den Leuchtbereich vermieden werden, wodurch insbesondere eine ungestörte und/oder optimierte Beleuchtung erzielt werden kann.

Die Dichtungseinheit könnte beispielsweise in wenigstens einem Betriebszustand bezüglich zumindest einer Vertikalrichtung oberhalb der Gehäuseeinheit und vorteilhaft zwischen der Gehäuseeinheit und der Aufstellplatte angeordnet sein. Vorzugsweise umschließt die Dichtungseinheit zumindest einen Gehäuseabschnitt der Gehäuseeinheit und insbesondere zumindest einen Diffusionseinheitenabschnitt der Diffusionseinheit wenigstens abschnittsweise. Unter der Wendung, dass die Dichtungseinheit zumindest einen Abschnitt einer Einheit "wenigstens abschnittsweise" umschließt, soll insbesondere verstanden werden, dass die Dichtungseinheit den Abschnitt in zumindest einer Ebene, welche insbesondere wenigstens im Wesentlichen parallel zu einer Haupterstreckungsebene der Aufstellplatte ausgerichtet ist, bezüglich einer geometrischen Mittelpunkts und/oder Schwerpunkts der Einheit in der Ebene über einen Winkelbereich von mindestens 180°, insbesondere von mindestens 270°, vorteilhaft von mindestens 300°, besonders vorteilhaft von mindestens 330° und vorzugsweise von mindestens 350° umschließt. Insbesondere liegt die Dichtungseinheit in wenigstens einem montierten Zustand formschlüssig an dem Gehäuseabschnitt der Gehäuseeinheit und/oder an dem Diffusionseinheitenabschnitt der Diffusionseinheit an. Dadurch kann der Leuchtbereich zwischen der Gehäuseeinheit und der Aufstellplatte insbesondere optimal abgedichtet werden, wodurch insbesondre eine optimierte Beleuchtung ermöglicht werden kann.

Der Beleuchtungsstreifen könnte beispielsweise genau eine, insbesondere einzige, Leuchteinheit aufweisen, welche insbesondere als eine Leuchtröhre und vorteilhaft als eine Leuchtstoffröhre ausgebildet sein könnte. Vorzugsweise weist der Beleuchtungsstreifen zumindest eine weitere Leuchteinheit und zumindest eine Lichttrenneinheit auf, welche in dem Betriebszustand zu einer wenigstens teilweisen Trennung von Lichtanteilen aus der Leuchteinheit und von Lichtanteilen aus der weiteren Leuchteinheit vorgesehen ist. Insbesondere könnte die Lichttrenneinheit als eine Lichtführungseinheit ausgebildet und zu einer Führung von Lichtanteilen aus der Leuchteinheit und von Lichtanteilen aus der weiteren Leuchteinheit vorgesehen sein. In wenigstens einem Betriebszustand ist die Lichttrenneinheit insbesondere innerhalb der Gehäuseeinheit angeordnet. Insbesondere ist die Lichttrenneinheit in wenigstens einem Betriebszustand an der Gehäuseeinheit angeordnet und insbesondere zumindest stoffschlüssig, vorteilhaft einstückig, mit der Gehäuseeinheit verbunden. Insbesondere durch eine einstückige Verbindung der Lichttrenneinheit mit der Gehäuseeinheit, kann insbesondere eine bestmögliche Ausgestaltung der Lichttrenneinheit, insbesondere zur Trennung von Lichtanteilen aus der Leuchteinheit und von Lichtanteilen aus der weiteren Leuchteinheit, ermöglicht werden. Es kann insbesondere eine einfache Herstellung erzielt werden, und zwar insbesondere in einem Vergleich zu alternativen Kochfeldvorrichtungen mit einer Lichttrenneinheit. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. In wenigstens einem Betriebszustand verhindert die Lichttrenneinheit insbesondere eine Vermischung von Lichtanteilen aus der Leuchteinheit und von Lichtanteilen aus der weiteren Leuchteinheit wenigstens im Wesentlichen. Dadurch können insbesondere ungewollte Interferenzeffekte zwischen Lichtanteilen aus der Leuchteinheit und Lichtanteilen aus der weiteren Leuchteinheit vermieden werden, wodurch die zumindest zwei Heizeinheiten insbesondere optimal markiert werden können.

Ferner wird vorgeschlagen, dass der Beleuchtungsstreifen zumindest ein Freihalteelement aufweist, welches bei einer Montage zu einer Verhinderung eines Eindringens zumindest eines Objekts in zumindest einen wenigstens teilweise von dem Beleuchtungsstreifen definierten Leuchtbereich, welcher in wenigstens einem montierten Zustand insbesondere zwischen der Gehäuseeinheit und der Aufstellplatte angeordnet ist, vorgesehen ist. Insbesondere ist das Freihalteelement an der Dichtungseinheit angeordnet und vorteilhaft stoffschlüssig, insbesondere einstückig, mit der Dichtungseinheit verbunden. Das Freihalteelement ist insbesondere als eine Lasche und vorteilhaft als eine flexible Lasche ausgebildet. Das Objekt könnte beispielsweise zumindest ein Kabel aufweisen. Alternativ oder zusätzlich könnte das Objekt zumindest eine Isolationseinheit, insbesondere zumindest eine Isolationsplatte, aufweisen, welche insbesondere zu einer Isolation der Aufstellplatte und der zumindest zwei Heizeinheiten gegeneinander vorgesehen sein und vorteilhaft wenigstens zu einem Großteil aus Kunstglimmer bestehen könnte. Unter einem "wenigstens teilweise" von dem Beleuchtungsstreifen definierten Leuchtbereich soll insbesondere ein Leuchtbereich verstanden werden, welcher von dem Beleuchtungsstreifen alleine oder von dem Beleuchtungsstreifen und zumindest einer weiteren Baueinheit, wie beispielsweise der Aufstellplatte, definiert ist. Dadurch kann insbesondere eine ungestörte Beleuchtung bereitgestellt werden, wodurch insbesondere ein hoher Bedienkomfort ermöglicht werden kann.

Zudem wird vorgeschlagen, dass die Kochfeldvorrichtung zumindest eine Kochfeldaußengehäuseeinheit, welche zumindest einen Lagerraum wenigstens teilweise definiert und innerhalb welcher der Beleuchtungsstreifen wenigstens zu einem Großteil angeordnet ist, aufweist. Unter einer "Kochfeldaußengehäuseeinheit" soll insbesondere eine Einheit verstanden werden, welche in wenigstens einem Betriebszustand zumindest einen, insbesondere als Hohlraum ausgebildeten Aufnahmeraum zu einer Aufnahme und/oder zu einer Lagerung wenigstens eines Bauteils wenigstens teilweise begrenzt und/oder definiert. Das Bauteil könnte beispielsweise zumindest eine Heizeinheit und/oder eine Steuereinheit und/oder eine Versorgungseinheit und/oder eine Bedienerschnittstelle sein. Insbesondere begrenzen die Kochfeldaußengehäuseeinheit und die Aufstellplatte insbesondere gemeinsam den Aufnahmeraum wenigstens im Wesentlichen. Der Aufnahmeraum ist insbesondere als ein Hohlraum ausgebildet. Die Kochfeldaußengehäuseeinheit nimmt in wenigstens einem montierten Zustand insbesondere eine Gewichtskraft von Bauteilen wenigstens zu einem Großteil auf und/oder überträgt die Gewichtskraft an zumindest eine weitere Einheit, wie beispielsweise an die Aufstellplatte. Vorteilhaft ist die Kochfeldaußengehäuseeinheit als eine Außengehäuseeinheit ausgebildet und definiert insbesondere gemeinsam mit der Aufstellplatte ein Kochfeldaußengehäuse wenigstens im Wesentlichen. In wenigstens einem Betriebszustand ist der Beleuchtungsstreifen insbesondere in zumindest einer Ebene, welche insbesondere wenigstens im Wesentlichen parallel zu einer Haupterstreckungsebene der Aufstellplatte ausgerichtet ist, von Wandungen der Kochfeldaußengehäuseeinheit umgeben, und zwar insbesondere bezüglich eines Mittelpunkts und/oder Schwerpunkts des Beleuchtungsstreifens über einen Winkelbereich von mindestens 180°, insbesondere von mindestens 270°, vorteilhaft von mindestens 300°, besonders vorteilhaft von mindestens 330° und vorzugsweise von mindestens 350°. Dadurch kann insbesondere eine geschützte Anordnung des Beleuchtungsstreifens ermöglicht werden, wodurch insbesondere eine langlebige Ausgestaltung erzielt werden kann, und zwar insbesondere in einem Vergleich zu einer Ausgestaltung, bei welcher der Beleuchtungsstreifen Teil einer Wandung der Kochfeldaußengehäuseeinheit ist.

Beispielsweise könnte der Beleuchtungsstreifen zumindest ein Befestigungselement aufweisen, welches zu einer Befestigung der Gehäuseeinheit an einer Kochfeldgehäuseseitenwand der Kochfeldaußengehäuseeinheit vorgesehen sein könnte. Vorzugsweise weist der Beleuchtungsstreifen zumindest ein Befestigungselement auf, welches zu einer Befestigung der Gehäuseeinheit an einem Kochfeldgehäuseboden der Kochfeldaußengehäuseeinheit vorgesehen ist. Insbesondere definiert der Kochfeldgehäuseboden in wenigstens einem Betriebszustand zumindest eine einem Bediener abgewandte Seite der Kochfeldaußengehäuseeinheit. Das Befestigungselement könnte die Gehäuseeinheit beispielsweise durch eine Rastverbindung und/oder durch eine Schraubverbindung und/oder durch eine durch Klemmung hervorgerufene Verbindung und/oder durch eine durch Verriegelung hervorgerufene Verbindung an dem Kochfeldgehäuseboden der Kochfeldaußengehäuseeinheit befestigen. Dadurch kann insbesondere eine besonders hohe Stabilität gewährleistet werden.

Eine besonders optimierte Beleuchtung kann insbesondere erreicht werden durch ein Kochfeld, insbesondere durch ein Induktionskochfeld, mit zumindest einer Kochfeldvorrichtung. Eine Beleuchtung kann insbesondere weiter optimiert werden durch ein Verfahren zu einem Betrieb einer Kochfeldvorrichtung, wobei zumindest zwei Heizeinheiten mittels eines einzigen Beleuchtungsstreifens markiert werden.

Die Kochfeldvorrichtung soll hierbei nicht auf die oben beschriebene Anwendung und Ausführungsform beschränkt sein. Insbesondere kann die Kochfeldvorrichtung zu einer Erfüllung einer hierin beschriebenen Funktionsweise eine von einer hierin genannten Anzahl von einzelnen Elementen, Bauteilen und Einheiten abweichende Anzahl aufweisen.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination.

Es zeigen:
- Fig. 1: ein Garsystem mit einem Kochfeld, das eine Kochfeldvorrichtung aufweist, und mit zwei Gargeschirren in einem Betriebszustand in einer schematischen Draufsicht,
- Fig. 2: eine Kochfeldgehäuseeinheit, eine Aufstellplatte und zwei Beleuchtungsstreifen der Kochfeldvorrichtung in einer schematischen Explosionsdarstellung,
- Fig. 3: einen der Beleuchtungsstreifen in einer perspektivischen Darstellung,
- Fig. 4: den Beleuchtungsstreifen aus Figur 3 in einer perspektivischen Explosionsdarstellung,
- Fig. 5: ein Gehäuseteilelement einer Gehäuseeinheit, eine Leiterplatte und eine Diffusionseinheit des Beleuchtungsstreifens aus Figur 3 in einer perspektivischen Darstellung,
- Fig. 6: einen vergrößerten Ausschnitt aus Figur 5,
- Fig. 7: einen Ausschnitt der Kochfeldgehäuseeinheit und des Beleuchtungsstreifens aus Figur 3 in einer perspektivischen Darstellung,
- Fig. 8: einen Ausschnitt des Beleuchtungsstreifens aus Figur 3 in einer perspektivischen Darstellung,
- Fig. 9: den Beleuchtungsstreifen aus Figur 3 in einer teilweise Schnittdarstellung,
- Fig. 10: die Beleuchtungsstreifen aus Figur 3 und eine Steuereinheit der Kochfeldvorrichtung in einer schematischen Darstellung,
- Fig. 11: das Garsystem mit dem Kochfeld und mit einem Gargeschirr in einem Betriebszustand in einer schematischen Draufsicht,
- Fig. 12: das Garsystem mit dem Kochfeld und mit einem Gargeschirr in einem Betriebszustand in einer schematischen Draufsicht,
- Fig. 13: das Garsystem mit dem Kochfeld und mit einem Gargeschirr in einem Betriebszustand in einer schematischen Draufsicht,
- Fig. 14: das Garsystem mit dem Kochfeld und mit einem Gargeschirr in einem Betriebszustand in einer schematischen Draufsicht,
- Fig. 15: das Garsystem mit dem Kochfeld und mit einem Gargeschirr in einem Betriebszustand in einer schematischen Draufsicht,
- Fig. 16: das Garsystem mit dem Kochfeld und mit einem Gargeschirr in einem Betriebszustand in einer schematischen Draufsicht,
- Fig. 17: das Garsystem mit dem Kochfeld und mit einem Gargeschirr in einem Betriebszustand in einer schematischen Draufsicht,
- Fig. 18: einen Beleuchtungsstreifen einer alternativen Kochfeldvorrichtung in einer perspektivischen Darstellung,
- Fig. 19: einen Beleuchtungsstreifen einer alternativen Kochfeldvorrichtung in einer perspektivischen Darstellung,
- Fig. 20: einen Beleuchtungsstreifen einer alternativen Kochfeldvorrichtung in einer perspektivischen Darstellung und
- Fig. 21: einen Beleuchtungsstreifen einer alternativen Kochfeldvorrichtung in einer perspektivischen Darstellung.

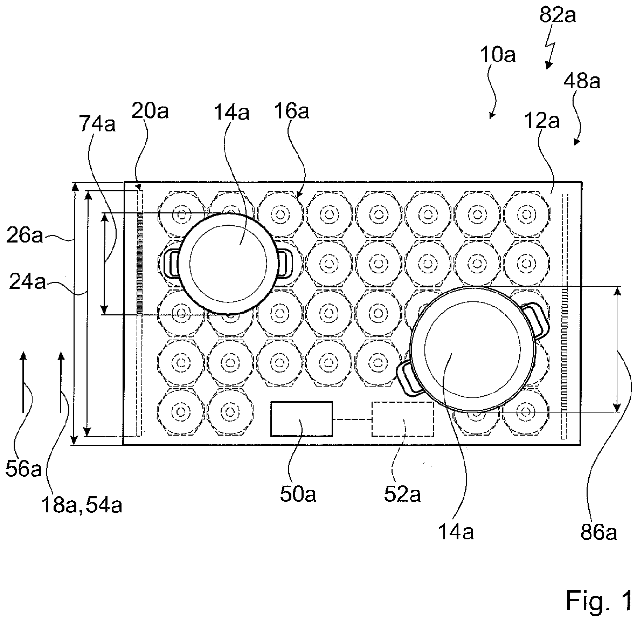

Fig. 1 zeigt ein Garsystem 82a mit einem Kochfeld 48a und mit zwei Gargeschirren 14a. Das Kochfeld 48a ist als ein Induktionskochfeld ausgebildet. Das Kochfeld 48a weist eine Kochfeldvorrichtung 10a auf, die als eine Induktionskochfeldvorrichtung ausgebildet ist.

Die Kochfeldvorrichtung 10a weist eine Aufstellplatte 12a auf. Im vorliegenden Ausführungsbeispiel ist die Aufstellplatte 12a als eine Kochfeldplatte ausgebildet. In einem montierten Zustand bildet die Aufstellplatte 12a einen Teil eines Kochfeldaußengehäuses aus, und zwar insbesondere eines Kochfeldaußengehäuses insbesondere des Kochfelds 48a. Die Aufstellplatte 12a ist zu einem Aufstellen von Gargeschirr 14a vorgesehen (vgl. Fig. 1 und 11 bis 17).

Die Kochfeldvorrichtung 10a weist eine Vielzahl an Heizeinheiten 16a zu einer Beheizung von Gargeschirr 14a auf. Von mehrfach vorhandenen Objekten ist in den Figuren jeweils lediglich eines mit einem Bezugszeichen versehen. Im vorliegenden Ausführungsbeispiel weist die Kochfeldvorrichtung 10a sechsunddreißig Heizeinheiten 16a auf. Die Heizeinheiten 16a sind in einer Einbaulage unterhalb der Aufstellplatte 12a angeordnet. Die Heizeinheiten 16a sind dazu vorgesehen, auf der Aufstellplatte 12a oberhalb der Heizeinheiten 16a aufgestelltes Gargeschirr 14a zu erhitzen. Die Heizeinheiten 16a sind im vorliegenden Ausführungsbeispiel als Induktionsheizeinheiten ausgebildet.

Die Kochfeldvorrichtung 10a weist eine Bedienerschnittstelle 50a zu einer Eingabe und/oder Auswahl von Betriebsparametern auf, beispielsweise einer Heizleistung und/oder einer Heizleistungsdichte und/oder einer Heizzone. Die Bedienerschnittstelle 50a ist zu einer Ausgabe eines Werts eines Betriebsparameters an einen Bediener vorgesehen.

Die Kochfeldvorrichtung 10a weist eine Steuereinheit 52a auf. Die Steuereinheit 52a ist dazu vorgesehen, in Abhängigkeit von mittels der Bedienerschnittstelle 50a eingegebenen Betriebsparametern Aktionen auszuführen und/oder Einstellungen zu verändern. Die Steuereinheit 52a regelt in einem Heizbetriebszustand eine Energiezufuhr zu den Heizeinheiten 16a.

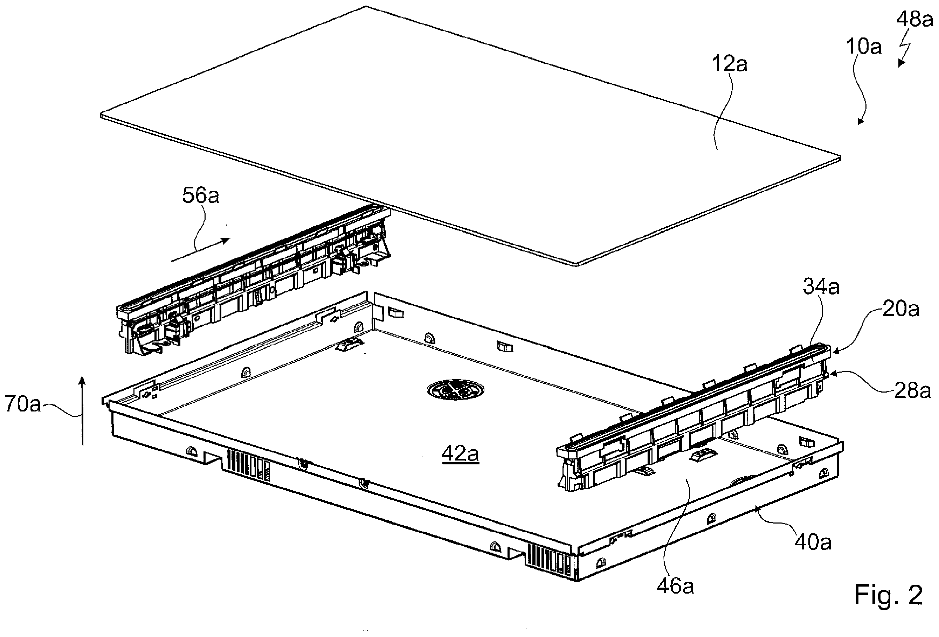

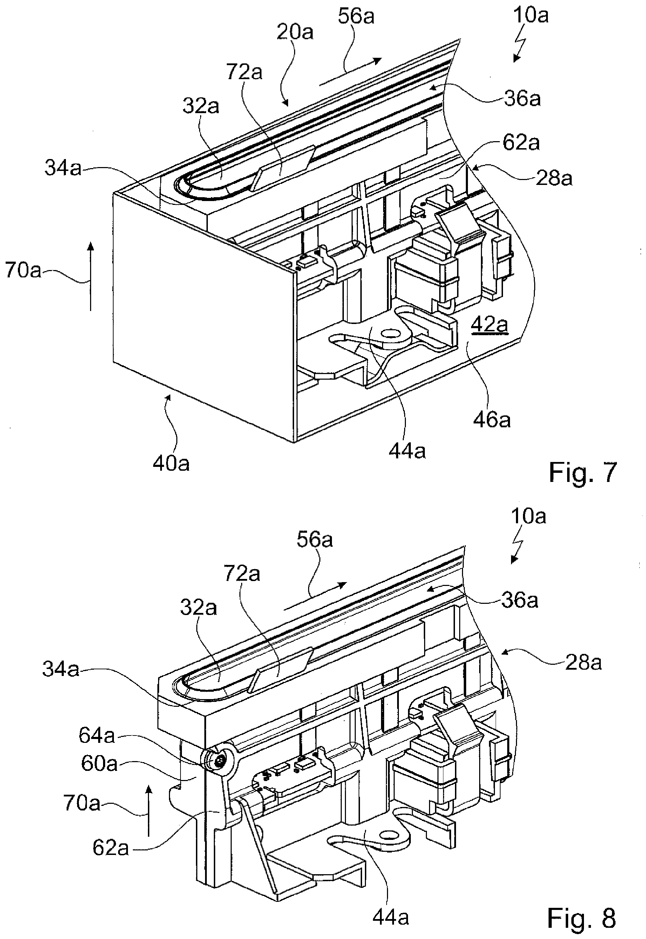

Die Kochfeldvorrichtung 10a weist eine Kochfeldaußengehäuseeinheit 40a auf (vgl. Fig. 2 und 7). In einem Betriebszustand bildet die Kochfeldaußengehäuseeinheit 40a einen Teil des Kochfeldaußengehäuses aus. Die Kochfeldaußengehäuseeinheit 40a bildet in einem Betriebszustand gemeinsam mit der Aufstellplatte 12a das Kochfeldaußengehäuse aus. Die Kochfeldaußengehäuseeinheit 40a definiert teilweise einen Lagerraum 42a. In einem Betriebszustand definiert die Kochfeldaußengehäuseeinheit 40a gemeinsam mit der Aufstellplatte 12a den Lagerraum 42a.

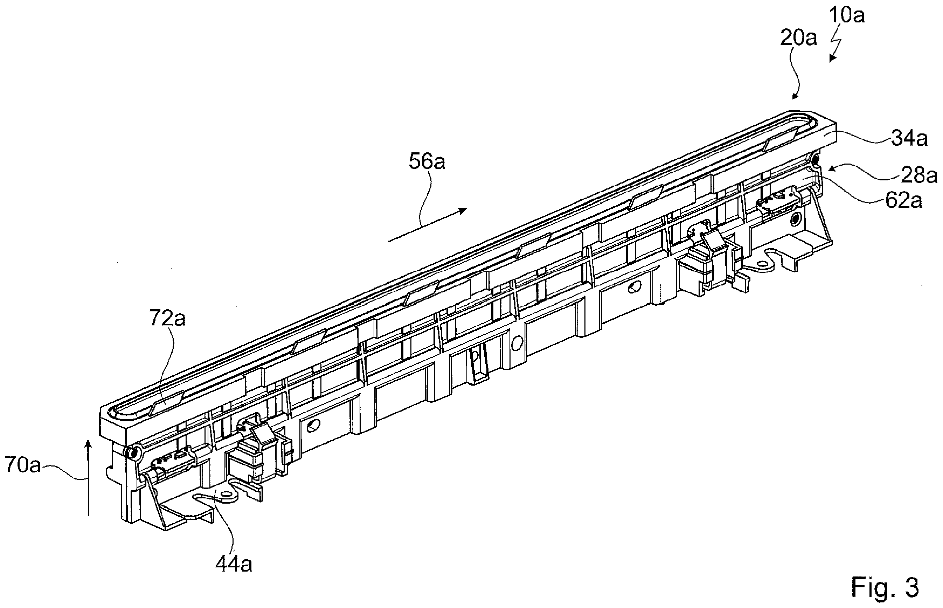

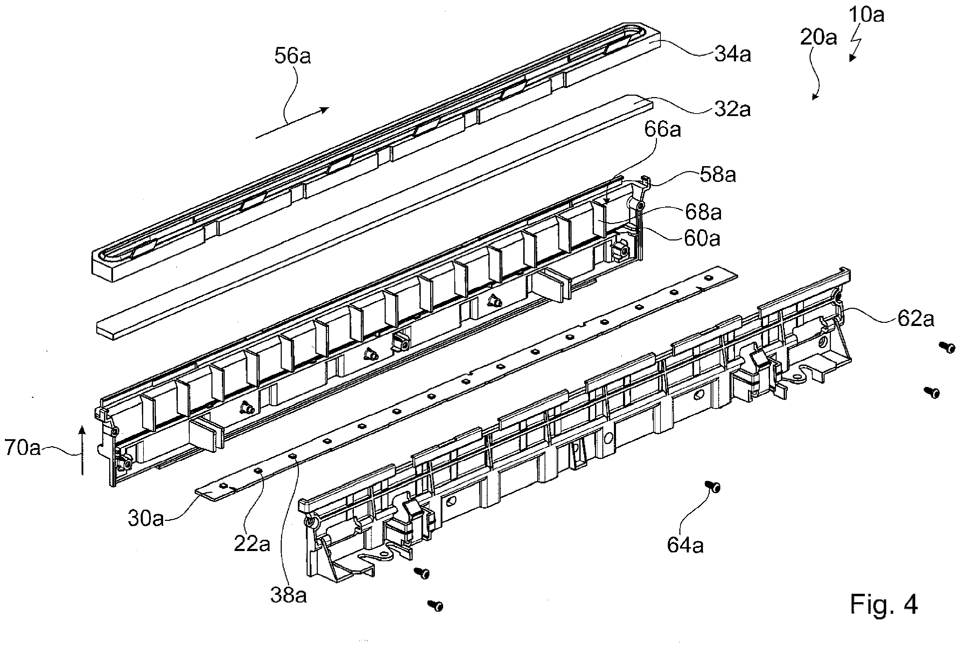

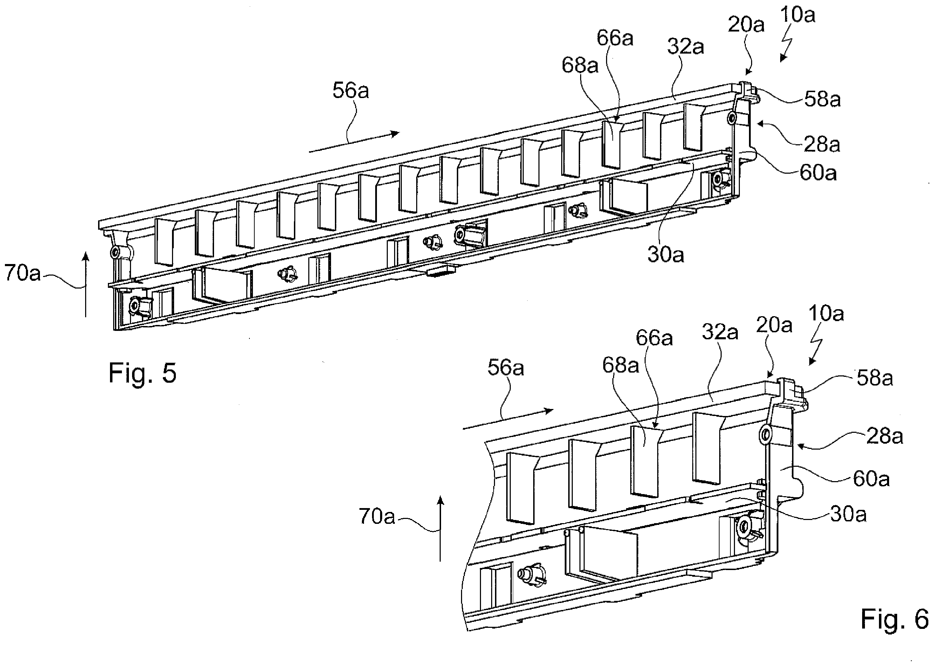

Im vorliegenden Ausführungsbeispiel weist die Kochfeldvorrichtung 10a zwei Beleuchtungsstreifen 20a auf (vgl. Fig. 1 bis 9). Im Folgenden wird lediglich einer der Beleuchtungsstreifen 20a beschrieben. Der Beleuchtungsstreifen 20a weist eine Leuchteinheit 22a auf (vgl. Fig. 4). Zusätzlich zu der Leuchteinheit 22a weist der Beleuchtungsstreifen 20a eine Vielzahl an weiteren Leuchteinheiten 38a auf. Im Folgenden wird lediglich eine der weiteren Leuchteinheiten 38a beschrieben.

Jede Leuchteinheit 22a, 38a ist unabhängig von anderen Leuchteinheiten 22a, 38a ansteuerbar. Die weitere Leuchteinheit 38a ist unabhängig von der Leuchteinheit 22a ansteuerbar. Im Folgenden wird stellvertretend für alle Leuchteinheiten 22a, 38a lediglich die Leuchteinheit 22a beschrieben. Eine analoge Beschreibung könnte auch für die weitere Leuchteinheit 38a durchgeführt werden.

Die Leuchteinheit 22a ist als eine farbige Leuchteinheit 22a ausgebildet. In einem Betriebszustand emittiert die Leuchteinheit 22a Licht mit unterschiedlichen Farben. Die Leuchteinheit 22a ist zu einer Emission von Licht mit zumindest zwei Farben vorgesehen. Im vorliegenden Ausführungsbeispiel ist die Leuchteinheit 22a zu einer Emission von Licht mit 256 Farben vorgesehen.

In einem Betriebszustand ist der Beleuchtungsstreifen 20a einer Vielzahl an Heizeinheiten 16a zugeordnet. Im vorliegenden Ausführungsbeispiel ist der Beleuchtungsstreifen 20a zu einer Markierung der Hälfte aller Heizeinheiten 16a dieser Hälfte aller Heizeinheiten 16a zugeordnet. Der Beleuchtungsstreifen 20a ist zu einer Markierung von achtzehn Heizeinheiten 16a den achtzehn Heizeinheiten 16a zugeordnet.

Im vorliegenden Ausführungsbeispiel weist der Beleuchtungsstreifen 20a eine Längserstreckung 24a von im Wesentlichen 445 mm auf. Der Beleuchtungsstreifen 20a ist in einem Betriebszustand parallel zu einer Tiefenrichtung 54a angeordnet. Der Beleuchtungsstreifen 20a weist eine Längserstreckungsrichtung 56a auf, welche in einem Betriebszustand parallel zu der Tiefenrichtung 54a ausgerichtet ist.

Der Beleuchtungsstreifen 20a erstreckt sich im vorliegenden Ausführungsbeispiel im Wesentlichen über eine gesamte Tiefenerstreckung 26a der Aufstellplatte 12a. Die Aufstellplatte 12a weist eine Tiefenerstreckung 26a von im Wesentlichen 480 mm auf. Der Beleuchtungsstreifen 20a erstreckt sich über im Wesentlichen 93 % einer gesamten Tiefenerstreckung 26a der Aufstellplatte 12a.

Der Beleuchtungsstreifen 20a weist eine Gehäuseeinheit 28a auf (vgl. Fig. 2 bis 9). In einem Betriebszustand ist die Leuchteinheit 22a zu einem Großteil innerhalb der Gehäuseeinheit 28a angeordnet. Die Leuchteinheit 22a ist in einem Betriebszustand zu einem Großteil von der Gehäuseeinheit 28a umgeben.

Der Beleuchtungsstreifen 20a weist eine Leiterplatte 30a auf (vgl. Fig. 4 bis 6 und 9). In einem Betriebszustand ist die Leiterplatte 30a zu einem Großteil innerhalb der Gehäuseeinheit 28a angeordnet. Die Leuchteinheit 22a ist in einem Betriebszustand auf der Leiterplatte 30a angeordnet. In einem Betriebszustand ist die Leuchteinheit 22a elektrisch mit der Leiterplatte 30a kontaktiert.

Der Beleuchtungsstreifen 20a weist eine Diffusionseinheit 32a auf (vgl. Fig. 2 bis 9). Die Diffusionseinheit 32a ist zu einer Streuung von durch die Leuchteinheit 22a emittierten Lichts vorgesehen. In einem Betriebszustand streut die Diffusionseinheit 32a durch die Leuchteinheit 22a emittiertes Licht. Im vorliegenden Ausführungsbeispiel weist die Diffusionseinheit 32a in einer Querschnittsebene, welche insbesondere senkrecht zu einer Längserstreckungsrichtung der Diffusionseinheit 32a ausgerichtet ist, eine quaderförmige Gestalt auf.

Die Diffusionseinheit 32a ist in einem Betriebszustand an der Gehäuseeinheit 28a angeordnet. Im vorliegenden Ausführungsbeispiel ist die Diffusionseinheit 32a in einem Betriebszustand zu einem Großteil innerhalb der Gehäuseeinheit 28a angeordnet.

Der Beleuchtungsstreifen 20a weist zumindest ein Diffusionseinheithalteelement 58a auf. Im vorliegenden Ausführungsbeispiel weist der Beleuchtungsstreifen 20a zwei Diffusionseinheithalteelemente 58a auf, welche insbesondere bezüglich der Längserstreckungsrichtung 56a des Beleuchtungsstreifens 20a in einander gegenüberliegenden Endbereichen des Beleuchtungsstreifens 20a angeordnet sind. Im Folgenden wird lediglich eines der Diffusionseinheithalteelemente 58a beschrieben.

Das Diffusionseinheithalteelement 58a ist an der Gehäuseeinheit 28a angeordnet. Das Diffusionseinheithalteelement 58a ist einstückig mit der Gehäuseeinheit 28a verbunden. Die Gehäuseeinheit 28a ist im vorliegenden Ausführungsbeispiel zweiteilig ausgebildet. Die Gehäuseeinheit 28a weist ein erstes Gehäuseteilelement 60a und ein zweites Gehäuseteilelement 62a auf. In einem Betriebszustand sind das erste Gehäuseteilelement 60a und das zweite Gehäuseteilelement 62a aneinander befestigt.

Der Beleuchtungsstreifen 20a weist zumindest ein Befestigungsmittel 64a auf. Im vorliegenden Ausführungsbeispiel weist der Beleuchtungsstreifen 20a fünf Befestigungsmittel 64a auf. Im Folgenden wird lediglich eines der Befestigungsmittel 64a beschrieben. In einem Betriebszustand befestigt das Befestigungsmittel 64a das erste Gehäuseteilelement 60a und das zweite Gehäuseteilelement 62a aneinander. Im vorliegenden Ausführungsbeispiel ist das Befestigungsmittel 64a als eine Schraube ausgebildet.

Der Beleuchtungsstreifen 20a weist eine Dichtungseinheit 34a auf (vgl. Fig. 2, 3 und 6 bis 9). In einem Betriebszustand dichtet die Dichtungseinheit 34a einen Leuchtbereich 36a zwischen der Gehäuseeinheit 28a und der Aufstellplatte 12a zu einem Großteil ab. Die Dichtungseinheit 34a ist zu einer Abdichtung des Leuchtbereichs 36a zwischen der Gehäuseeinheit 28a und der Aufstellplatte 12a vorgesehen.

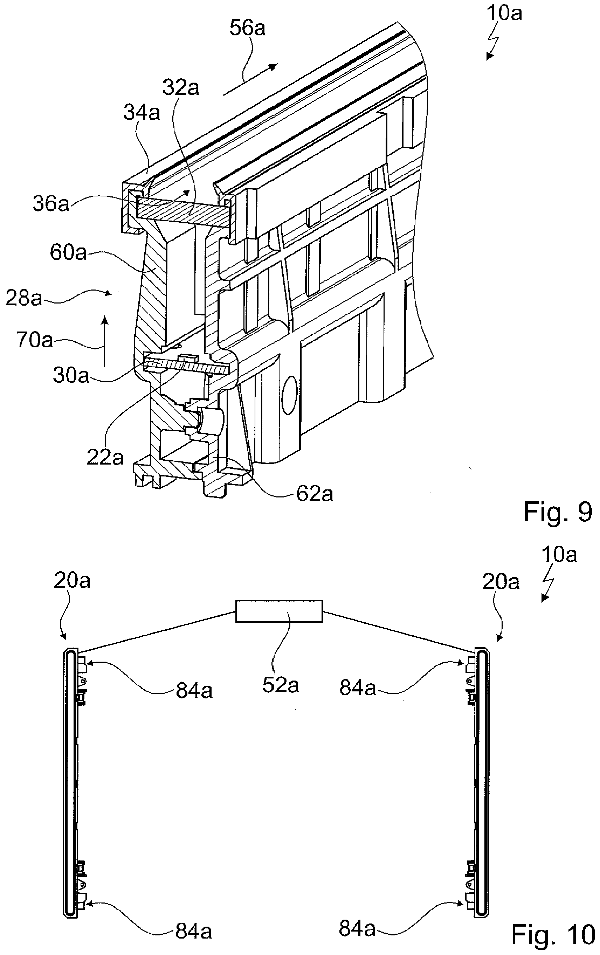

In einem Betriebszustand ist die Gehäuseeinheit 28a teilweise innerhalb der Dichtungseinheit 34a angeordnet. Die Dichtungseinheit 34a umschließt in einem Betriebszustand einen Gehäuseabschnitt der Gehäuseeinheit 28a abschnittsweise (vgl. insbesondere Fig. 9). Der Gehäuseabschnitt der Gehäuseeinheit 28a ist in einem Betriebszustand an einem der Aufstellplatte 12a zugewandten Bereich der Gehäuseeinheit 28a angeordnet.

Der Beleuchtungsstreifen 20a weist eine Lichttrenneinheit 66a auf (vgl. Fig. 4 bis 6). In einem Betriebszustand ist die Lichttrenneinheit 66a an der Gehäuseeinheit 28a angeordnet und insbesondere einstückig mit der Gehäuseeinheit 28a verbunden.

Die Lichttrenneinheit 66a weist zumindest ein Lichttrennelement 68a auf. Die Lichttrenneinheit 66a weist im vorliegenden Ausführungsbeispiel eine Vielzahl an Lichttrennelementen 68a auf. Im Folgenden wird lediglich eines der Lichttrennelemente 68a beschrieben. Das Lichttrennelement 68a ist stegförmig ausgebildet. Das Lichttrennelement 68a erstreckt sich in einem Betriebszustand im Wesentlichen parallel zu einer Vertikalrichtung 70a.

In einem Betriebszustand trennt die Lichttrenneinheit 66a, insbesondere mittels des Lichttrennelements 68a, Lichtanteile aus der Leuchteinheit 22a und Lichtanteile aus der weiteren Leuchteinheit 38a teilweise. Die Lichttrenneinheit 66a ist, insbesondere mittels des Lichttrennelements 68a, zu einer wenigstens teilweisen Trennung von Lichtanteilen aus der Leuchteinheit 22a und von Lichtanteilen aus der weiteren Leuchteinheit 38a vorgesehen.

Im vorliegenden Ausführungsbeispiel weist der Beleuchtungsstreifen 20a eine Vielzahl an Freihalteelementen 72a auf (vgl. Fig. 2 bis 4 und 7 bis 9). Im Folgenden wird lediglich eines der Freihalteelemente 72a beschrieben. Das Freihalteelement 72a ist bei einer Montage zu einer Verhinderung eines Eindringens zumindest eines Objekts in den teilweise von dem Beleuchtungsstreifen 20a definierten Leuchtbereich 36a vorgesehen.

Das Freihalteelement 72a ist im vorliegenden Ausführungsbeispiel laschenförmig ausgebildet. In einem Betriebszustand ist das Freihalteelement 72a an der Dichtungseinheit 34a angeordnet und insbesondere einstückig mit der Dichtungseinheit 34a verbunden.

In einem Betriebszustand ist der Beleuchtungsstreifen 20a zu einem Großteil innerhalb der Kochfeldaußengehäuseeinheit 40a angeordnet. Der Beleuchtungsstreifen 20a ist in einem Betriebszustand zu einem Großteil innerhalb des Lagerraums 42a angeordnet.

Der Beleuchtungsstreifen 20a ist in einem Betriebszustand an einem Kochfeldgehäuseboden 46a der Kochfeldaußengehäuseeinheit 40a befestigt (vgl. Fig. 2 und 7). Der Beleuchtungsstreifen 20a weist im vorliegenden Ausführungsbeispiel zwei Befestigungselemente 44a auf. Im Folgenden wird lediglich eines der Befestigungselemente 44a beschrieben. In einem Betriebszustand befestigt das Befestigungselement 44a die Gehäuseeinheit 28a des Beleuchtungsstreifens 20a an dem Kochfeldgehäuseboden 46a der Kochfeldaußengehäuseeinheit 40a. Das Befestigungselement 44a ist zu einer Befestigung der Gehäuseeinheit 28a an dem Kochfeldgehäuseboden 46a der Kochfeldaußengehäuseeinheit 40a vorgesehen.

Der Beleuchtungsstreifen 20a ist zu einer Ansteuerung durch die Steuereinheit 52a vorgesehen (vgl. Fig. 10). Der Beleuchtungsstreifen 20a weist zumindest einen Ansteuerungsanschluss 84a auf. Im vorliegenden Ausführungsbeispiel weist der Beleuchtungsstreifen 20a zwei Ansteuerungsanschlüsse 84a auf. Bezüglich der Längserstreckungsrichtung 56a des Beleuchtungsstreifens 20a sind die Ansteuerungsanschlüsse 84a in einander gegenüberliegenden Endbereichen des Beleuchtungsstreifens 20a angeordnet. Hierdurch kann der Beleuchtungsstreifen 20a flexibel auf jeder Kochfeldseite, welche insbesondere in einander bezüglich einer Querrichtung gegenüberliegenden Endbereichen der Kochfeldaußengehäuseeinheit 40a angeordnet sind, montierbar ist.

In einem Verfahren zu einem Betrieb der Kochfeldvorrichtung 10a werden in einem Betriebszustand die Hälfte aller Heizeinheiten 16a mittels eines einzigen Beleuchtungsstreifens 20a markiert (vgl. Fig. 1 und 11 bis 17).

Beispielsweise sind in einem Betriebszustand zwei Gargeschirre 14a auf der Aufstellplatte 12a aufgestellt (vgl. Fig. 1). In einem Betriebszustand zeigt der Beleuchtungsstreifen 20a bezüglich einer Richtung 18a eine Erstreckung 74a, 86a jedes Gargeschirrs 14a der Gargeschirre 14a an. Der Beleuchtungsstreifen 20a zeigt in einem Betriebszustand in der Richtung 18a eine Erstreckung 74a eines ersten Gargeschirrs 14a der Gargeschirre 14a an. In einem Betriebszustand zeigt der Beleuchtungsstreifen 20a in der Richtung 18a eine Erstreckung 86a eines zweiten Gargeschirrs 14a der Gargeschirre 14a an. Die Erstreckung 74a des ersten Gargeschirrs 14a in der Richtung 18a ist kleiner als die Erstreckung 86a des zweiten Gargeschirrs 14a in der Richtung 18a.

Zusätzlich zu der Erstreckung 74a, 86a des Gargeschirrs 14a bezüglich der Richtung 18a zeigt der Beleuchtungsstreifen 20a in einem Betriebszustand bezüglich der Richtung 18a eine Lage jedes Gargeschirrs 14a der Gargeschirre 14a an.

In einem Betriebszustand zeigt der Beleuchtungsstreifen 20a einen Heizzustand des Gargeschirrs 14a an (vgl. Fig. 1). Der Beleuchtungsstreifen 20a zeigt in einem Betriebszustand den insbesondere als Heizleistung ausgebildeten Heizzustand des Gargeschirrs 14a mit verschiedenen Farben an. Beispielsweise zeigt der Beleuchtungsstreifen 20a einen hohen insbesondere als Heizleistung ausgebildeten Heizzustand mit einer anderen Farbe an als einen geringen insbesondere als Heizleistung ausgebildeten Heizzustand. Die unterschiedlichen Farben sind in Fig. 1 durch unterschiedlich dichte Schraffuren gekennzeichnet, wobei einer dichten Schraffur eine hohe Heizleistung und eine weite Schraffur einer geringen Heizleistung zugeordnet ist.

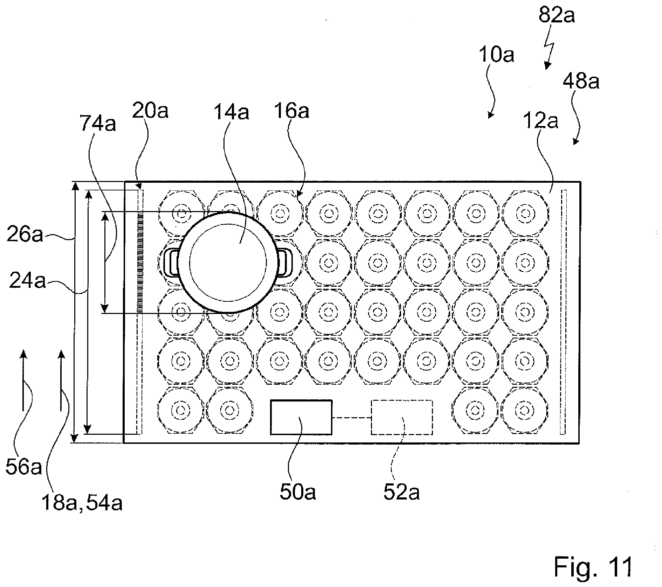

Beispielsweise wird ausgehend von der Konfiguration aus Fig. 1 ein Gargeschirr 14a der Gargeschirre 14a von der Aufstellplatte 12a entfernt (vgl. Fig. 11). In einem Betriebszustand zeigt der Beleuchtungsstreifen 20a einen als Restwärme ausgebildeten Heizzustand an. Der Beleuchtungsstreifen 20a zeigt den insbesondere als Restwärme ausgebildeten Heizzustand auch nach einem Entfernen des Gargeschirrs 14a von der Aufstellplatte 12a an, und zwar insbesondere so lange, bis eine Restwärme einen Schwellwert unterschreitet. Beispielsweise zeigt der Beleuchtungsstreifen 20a einen hohen insbesondere als Restwärme ausgebildeten Heizzustand mit einer anderen Farbe an als einen geringen insbesondere als Restwärme ausgebildeten Heizzustand.

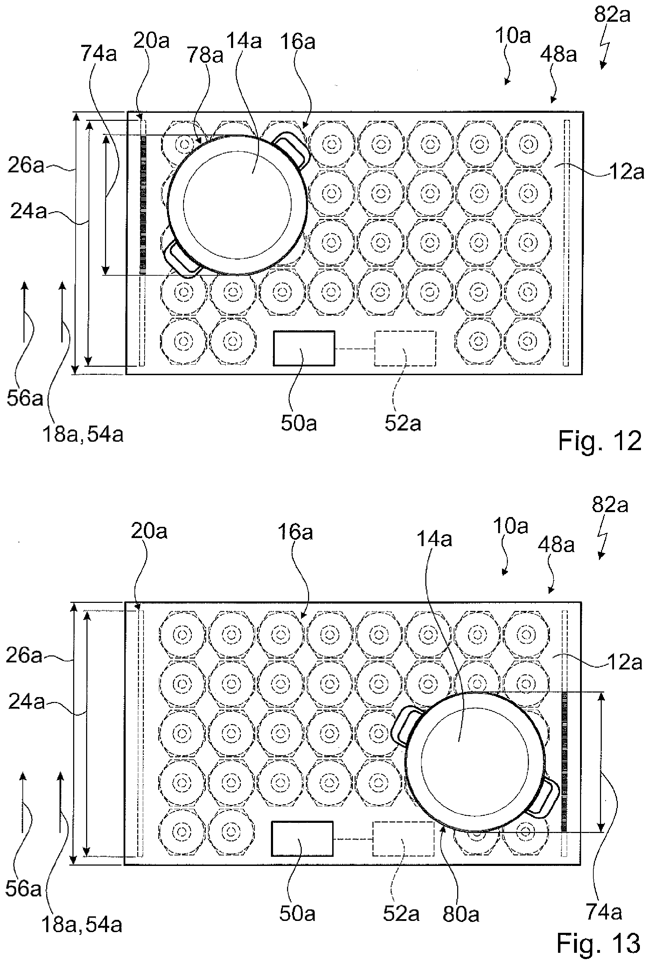

In einem Betriebszustand zeigt der Beleuchtungsstreifen 20a eine Bewegung des Gargeschirrs 14a von einer ersten Aufstellposition 78a zu einer zweiten Aufstellposition 80a an (vgl. Fig. 12 und 13). Der Beleuchtungsstreifen 20a zeigt in einem Betriebszustand die Bewegung des Gargeschirrs 14a durch Deaktivierung der Beleuchtung der ersten Aufstellposition 78a und Aktivierung einer Beleuchtung der zweiten Aufstellposition 80a an. Vor der Aktivierung der Beleuchtung der zweiten Aufstellposition 80a zeigt der Beleuchtungsstreifen 20a in einem Betriebszustand durch eine Änderung einer Beleuchtungseigenschaft eine Bedienaufforderung an. Der Beleuchtungsstreifen 20 zeigt in einem Betriebszustand vor der Aktivierung der Beleuchtung der zweiten Aufstellposition 80a eine Animation an, um dem Bediener insbesondere die Bedienaufforderung zu übermitteln. Die Bedienaufforderung ist im vorliegenden Ausführungsbeispiel eine Aufforderung zu einer Bestätigung einer Bewegung des Gargeschirrs 14a von der ersten Aufstellposition 78a zu einer zweiten Aufstellposition 80a.

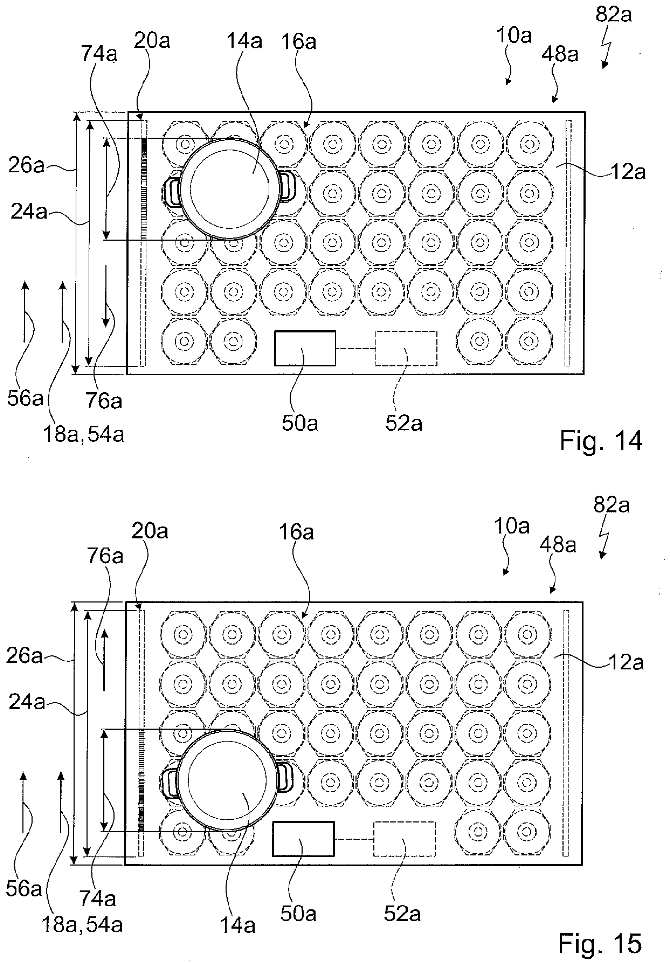

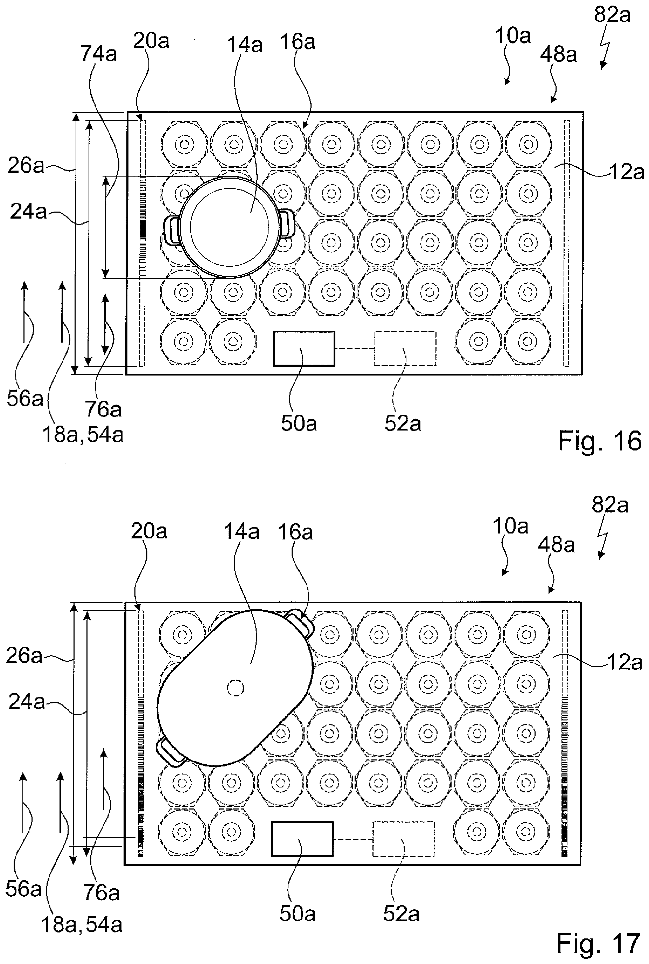

In einem Betriebszustand zeigt der Beleuchtungsstreifen 20a eine Bewegungsrichtung 76a an, in welche das Gargeschirr 14a bewegbar ist (vgl. Fig. 14 bis 16). Der Beleuchtungsstreifen 20a zeigt in einem Betriebszustand die Bewegungsrichtung 76a mittels eines Intensitätsverlaufs, und zwar insbesondere mittels eines Intensitätsgradienten, an. Ist beispielsweise ein Gargeschirr 14a in einem hinteren Bereich der Aufstellplatte 12a aufgestellt, zeigt der Beleuchtungsstreifen 20a die Bewegungsrichtung 76a in Richtung eines vorderen Bereichs der Aufstellplatte 12a an (vgl. Fig. 14). Ist beispielsweise ein Gargeschirr 14a in einem vorderen Bereich der Aufstellplatte 12a aufgestellt, zeigt der Beleuchtungsstreifen 20a die Bewegungsrichtung 76a in Richtung eines hinteren Bereichs der Aufstellplatte 12a an (vgl. Fig. 15). Bei einem Gargeschirr 14a, welches in einem mittleren Bereich der Aufstellplatte 12a angeordnet ist, zeigt der Beleuchtungsstreifen 20a die Bewegungsrichtung 76a in Richtung eines hinteren Bereichs der Aufstellplatte 12a und in Richtung eines vorderen Bereichs der Aufstellplatte 12a an (vgl. Fig. 16).

In einem Verfahren zu einem Betrieb der Kochfeldvorrichtung 10a wird in einem Betriebszustand bezüglich der Richtung 18a eine Erstreckung 74a des Gargeschirrs 14a mittels des Beleuchtungsstreifens 20a angezeigt.

Der Beleuchtungsstreifen 20a zeigt in einem Betriebszustand, insbesondere alternativ oder zusätzlich zu der Erstreckung 74a des Gargeschirrs 14a, bezüglich der Richtung 18a eine sich in der Richtung 18a verändernde, insbesondere vordefinierte, Heizleistung an (vgl. Fig. 17). Ist beispielsweise eine insbesondere vordefinierte Heizleistung in einem vorderen Bereich der Aufstellplatte 12a größer als in einem hinteren Bereich der Aufstellplatte 12a und nimmt die Heizleistung von dem vorderen Bereich in Richtung des hinteren Bereichs insbesondere monoton ab, zeigt der Beleuchtungsstreifen 20a bezüglich der Richtung 18a die sich in der Richtung 18a verändernde, insbesondere vordefinierte, Heizleistung mittels eines Intensitätsverlaufs und/oder mittels eines Farbverlaufs und/oder mittels eines Helligkeitsverlaufs an.

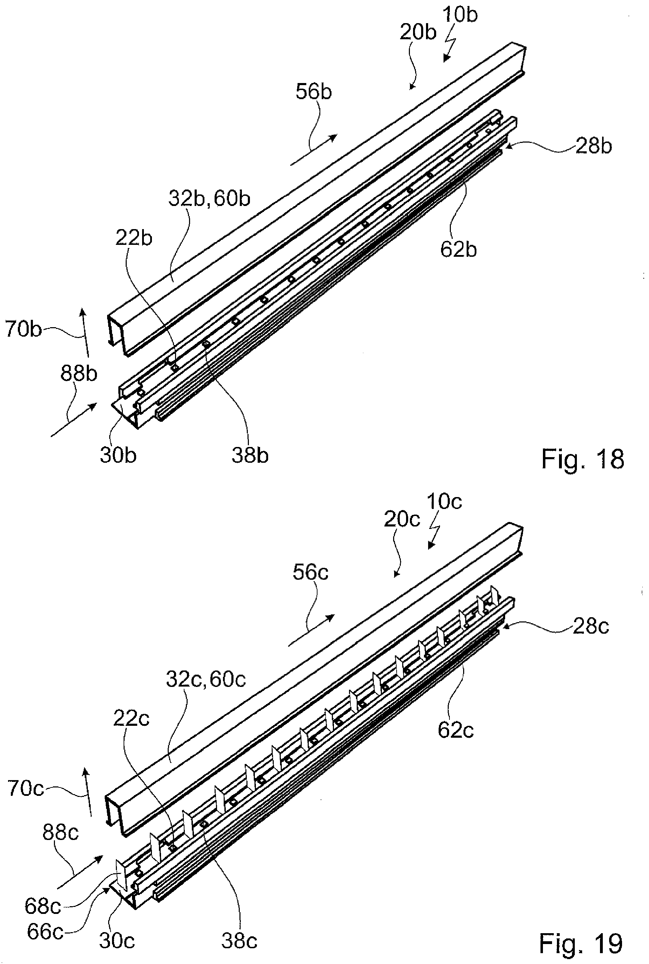

In Fig. 18 bis 21 sind weitere Ausführungsbeispiele der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des Ausführungsbeispiels der Fig. 1 bis 17 verwiesen werden kann. Zur Unterscheidung der Ausführungsbeispiele ist der Buchstabe a in den Bezugszeichen des Ausführungsbeispiels in den Fig. 1 bis 17 durch die Buchstaben b bis e in den Bezugszeichen des Ausführungsbeispiels der Fig. 18 bis 21 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Fig. 1 bis 17 verwiesen werden.

Fig. 18 zeigt einen Beleuchtungsstreifen 20b einer alternativen Kochfeldvorrichtung 10b. Der Beleuchtungsstreifen 20b weist eine Diffusionseinheit 32b auf, die zu einer Streuung von durch Leuchteinheiten 22b des Beleuchtungsstreifens 20b emittierten Lichts vorgesehen ist. Im vorliegenden Ausführungsbeispiel weist die Diffusionseinheit 32b in einer Querschnittsebene, welche insbesondere senkrecht zu einer Längserstreckungsrichtung der Diffusionseinheit 32b ausgerichtet ist, eine U-förmige Gestalt auf.

Der Beleuchtungsstreifen 20b weist eine Gehäuseeinheit 28b auf. Die Gehäuseeinheit 28b ist im vorliegenden Ausführungsbeispiel zweiteilig ausgebildet. Die Gehäuseeinheit 28b weist ein erstes Gehäuseteilelement 60b und ein zweites Gehäuseteilelement 62b auf. In einem Betriebszustand sind das erste Gehäuseteilelement 60b und das zweite Gehäuseteilelement 62b aneinander befestigt. Das erste Gehäuseteilelement 60a ist in einem Betriebszustand an einer einer Aufstellplatte 12b zugewandten Seite des Beleuchtungsstreifens 20b angeordnet. Das zweite Gehäuseteilelement 62a ist in einem Betriebszustand an einer der Aufstellplatte 12b abgewandten Seite des Beleuchtungsstreifens 20b angeordnet.

Die Diffusionseinheit 32b ist einstückig mit dem Beleuchtungsstreifen 20b, und zwar insbesondere mit dem ersten Gehäuseteilelement 60b des Beleuchtungsstreifens 20b, ausgebildet. Der Beleuchtungsstreifen 20b besteht im vorliegenden Ausführungsbeispiel zu einem Großteil aus Kunststoff. Der Beleuchtungsstreifen 20b ist frei von einer Lichttrenneinheit.

Eine Leiterplatte 30b des Beleuchtungsstreifens 20b ist in einem Betriebszustand innerhalb der Gehäuseeinheit 28b, und zwar insbesondere innerhalb des zweiten Gehäuseteilelements 62b des Beleuchtungsstreifens 20b, angeordnet. Der Beleuchtungsstreifen 20b weist eine Aufnahmenut (nicht dargestellt) auf, welche insbesondere an dem zweiten Gehäuseteilelement 62b angeordnet ist. Die Aufnahmenut ist zu einer Halterung und/oder Lagerung der Leiterplatte 30b vorgesehen. Die Leiterplatte 30b wird bei einer Montage in einer Einschubrichtung 88b in die Aufnahmenut eingebacht und/oder eingeschoben. Die Einschubrichtung 88b ist im Wesentlichen parallel zu einer Längserstreckungsrichtung 56b des Beleuchtungsstreifens 20b ausgerichtet. In einem Betriebszustand ist die Leiterplatte 30b in der Aufnahmenut gehalten und/oder gelagert.

Fig. 19 zeigt einen Beleuchtungsstreifen 20c einer alternativen Kochfeldvorrichtung 10c. Der Beleuchtungsstreifen 20c weist eine Lichttrenneinheit 66c auf. Die Lichttrenneinheit 66c ist in einem Betriebszustand innerhalb einer Gehäuseeinheit 28c des Beleuchtungsstreifens 20c angeordnet. In einem Betriebszustand ist die Lichttrenneinheit 66c auf einer Leiterplatte 30c des Beleuchtungsstreifens 20c angeordnet. Die Lichttrenneinheit 66c und die Gehäuseeinheit 28c sind als separate Objekte ausgebildet.

Die Lichttrenneinheit 66c weist eine Vielzahl an Lichttrennelementen 68c auf. Jeweils ein Lichttrennelement 68c ist bezüglich einer Längserstreckungsrichtung 56c des Beleuchtungsstreifens 20c zwischen zwei zueinander benachbart angeordneten Leuchteinheiten 22c des Beleuchtungsstreifens 20c angeordnet. Die Lichttrennelemente 68c sind stegartig und/oder plättchenartig ausgebildet. In einem Betriebszustand bildet die Lichttrenneinheit 66c, insbesondere die Lichttrennelemente 68c der Lichttrenneinheit 66c, mit der Gehäuseeinheit 28c, insbesondere mit dem zweiten Gehäuseteilelement 62c der Gehäuseeinheit 28c, Lichtkammern aus. Eine Anzahl an Lichtkammern und eine Anzahl an Leuchteinheiten 22c ist im Wesentlichen identisch.

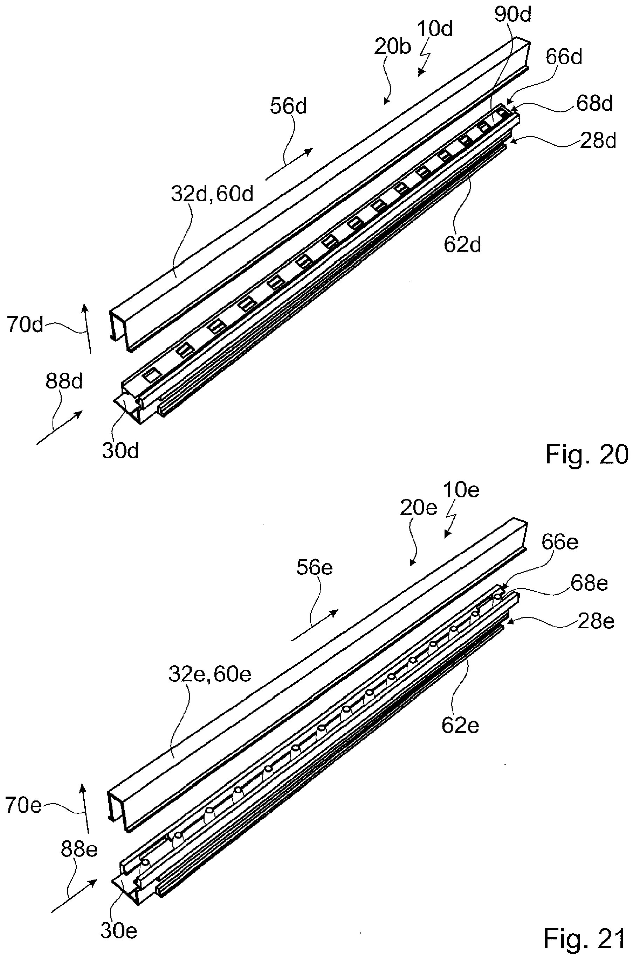

Fig. 20 zeigt einen Beleuchtungsstreifen 20d einer alternativen Kochfeldvorrichtung 10d. Der Beleuchtungsstreifen 20d weist eine Lichttrenneinheit 66d auf. Die Lichttrenneinheit 66d ist in einem Betriebszustand innerhalb einer Gehäuseeinheit 28d des Beleuchtungsstreifens 20d angeordnet. In einem Betriebszustand ist die Lichttrenneinheit 66d bezüglich einer Vertikalrichtung 70d beabstandet zu einer Leiterplatte 30d des Beleuchtungsstreifens 20d angeordnet. Die Lichttrenneinheit 66d ist in einem Betriebszustand von der Gehäuseeinheit 28d, und zwar insbesondere in einem zweiten Gehäuseteilelement 62d der Gehäuseeinheit 28d, gehalten und/oder gelagert.

Die Lichttrenneinheit 66d weist eine Vielzahl an Lichttrennelementen 68d auf. Im Folgenden wird lediglich eines der Lichttrennelemente 68d beschrieben. Das Lichttrennelement 68d ist einer Leuchteinheit 22d des Beleuchtungsstreifens 20d zugeordnet. Die Lichttrenneinheit 66d ist im vorliegenden Ausführungsbeispiel einstückig ausgebildet. Die Lichttrenneinheit 66d weist einen Grundkörper 90d auf. Der Grundkörper 90d weist eine plattenförmige Gestalt auf. Der Grundkörper 90d weist eine längliche Gestalt auf. Das Lichttrennelement 68d ist als eine Ausnehmung und/oder als eine Öffnung und/oder als ein Loch des Grundkörpers 90d ausgebildet. Eine derartige Ausgestaltung der Lichttrenneinheit 66d ist als "pinhole application" bezeichnet.

Fig. 21 zeigt einen Beleuchtungsstreifen 20e einer alternativen Kochfeldvorrichtung 10e. Der Beleuchtungsstreifen 20e weist eine Lichttrenneinheit 66e auf. Die Lichttrenneinheit 66e ist in einem Betriebszustand innerhalb einer Gehäuseeinheit 28e des Beleuchtungsstreifens 20e angeordnet. In einem Betriebszustand ist die Lichttrenneinheit 66e bezüglich einer Vertikalrichtung 70e auf einer Leiterplatte 30e des Beleuchtungsstreifens 20e angeordnet. Die Lichttrenneinheit 66e ist in einem Betriebszustand von der Leiterplatte 30e, und zwar insbesondere mittelbar und/oder unmittelbar, gehalten und/oder gelagert.

Die Lichttrenneinheit 66e weist eine Vielzahl an Lichttrennelementen 68e auf. Die Lichttrenneinheit 66e ist im vorliegenden Ausführungsbeispiel mehrteilig ausgebildet. Eine Anzahl an Lichttrennelementen 68e und eine Anzahl an Leuchteinheiten 22e des Beleuchtungsstreifens 20e ist identisch. Im Folgenden wird lediglich eines der Lichttrennelemente 68e und lediglich eine der Leuchteinheiten 22e beschrieben.

Das Lichttrennelement 68e ist der Leuchteinheit 22e des Beleuchtungsstreifens 20e zugeordnet. In einem Betriebszustand ist das Lichttrennelement 68e bezüglich einer Vertikalrichtung 70e zu einem Großteil oberhalb der Leuchteinheit 22e angeordnet. Das Lichttrennelement 68e ist im vorliegenden Ausführungsbeispiel als ein Kollimator ausgebildet.

### Bezugszeichen

- 10: Kochfeldvorrichtung
- 12: Aufstellplatte
- 14: Gargeschirr
- 16: Heizeinheit
- 18: Richtung
- 20: Beleuchtungsstreifen
- 22: Leuchteinheit
- 24: Längserstreckung
- 26: Tiefenerstreckung
- 28: Gehäuseeinheit
- 30: Leiterplatte
- 32: Diffusionseinheit
- 34: Dichtungseinheit
- 36: Leuchtbereich
- 38: Weitere Leuchteinheit
- 40: Kochfeldaußengehäuseeinheit
- 42: Lagerraum
- 44: Befestigungselement
- 46: Kochfeldgehäuseboden
- 48: Kochfeld
- 50: Bedienerschnittstelle
- 52: Steuereinheit
- 54: Tiefenrichtung
- 56: Längserstreckungsrichtung
- 58: Diffusionseinheithalteelement
- 60: Erstes Gehäuseteilelement
- 62: Zweites Gehäuseteilelement
- 64: Befestigungsmittel
- 66: Lichttrenneinheit
- 68: Lichttrennelement
- 70: Vertikalrichtung
- 72: Freihalteelement
- 74: Erstreckung
- 76: Bewegungsrichtung
- 78: Erste Aufstellposition
- 80: Zweite Aufstellposition
- 82: Garsystem
- 84: Ansteuerungsanschluss
- 86: Erstreckung
- 88: Einschubrichtung
- 90: Grundkörper

## Patentansprüche

1. Kochfeldvorrichtung, insbesondere Induktionskochfeldvorrichtung, mit zumindest einer Aufstellplatte (12a-e), welche zu einem Aufstellen wenigstens eines Gargeschirrs (14a-e) vorgesehen ist, mit zumindest zwei Heizeinheiten (16a-e) zu einer Beheizung des Gargeschirrs (14a-e) und mit zumindest einem Beleuchtungsstreifen (20a-e), wobei der Beleuchtungsstreifen (20a-e) zumindest eine Leuchteinheit (22a-e) aufweist und in wenigstens einem Betriebszustand zu einer Markierung der zumindest zwei Heizeinheiten (16a-e) den zumindest zwei Heizeinheiten (16a-e) zugeordnet ist, **dadurch gekennzeichnet, dass** der Beleuchtungsstreifen (20a-e) in wenigstens einem Betriebszustand bezüglich zumindest einer Richtung (18a-e) zumindest eine sich in der Richtung (18a-e) verändernde Heizleistung anzeigt.

2. Kochfeldvorrichtung zumindest nach dem Oberbegriff des Anspruchs 1 und insbesondere nach Anspruch 1, **dadurch gekennzeichnet, dass** der Beleuchtungsstreifen (20a-e) eine Längserstreckung (24a-e) von mindestens 200 mm aufweist.

3. Kochfeldvorrichtung nach einem der vorgehergehenden Ansprüche, **dadurch gekennzeichnet, dass** sich der Beleuchtungsstreifen (20a-e) wenigstens im Wesentlichen über eine gesamte Tiefenerstreckung (26a-e) der Aufstellplatte (12a-e) erstreckt.

4. Kochfeldvorrichtung nach einem der vorgehergehenden Ansprüche, **dadurch gekennzeichnet, dass** der Beleuchtungsstreifen (20a-e) zumindest eine Gehäuseeinheit (28a-e) aufweist, innerhalb welcher die Leuchteinheit (22a-e) wenigstens zu einem Großteil angeordnet ist.

5. Kochfeldvorrichtung nach Anspruch 4, **dadurch gekennzeichnet, dass** der Beleuchtungsstreifen (20a-e) zumindest eine Leiterplatte (30a-e) aufweist, welche wenigstens zu einem Großteil innerhalb der Gehäuseeinheit (28a-e) angeordnet ist und auf welcher die Leuchteinheit (22a-e) angeordnet ist.

6. Kochfeldvorrichtung nach einem der vorhergehenden Ansprüche, **dadurch gekennzeichnet, dass** der Beleuchtungsstreifen (20a-e) zumindest eine Diffusionseinheit (32a-e) aufweist, welche zu einer Streuung von durch die Leuchteinheit (22a-e) emittierten Lichts vorgesehen ist.

7. Kochfeldvorrichtung zumindest nach den Ansprüchen 4 und 6, **dadurch gekennzeichnet, dass** die Diffusionseinheit (32a-e) an der Gehäuseeinheit (28a-e) angeordnet ist.

8. Kochfeldvorrichtung zumindest nach Anspruch 4, **dadurch gekennzeichnet, dass** der Beleuchtungsstreifen (20a) zumindest eine Dichtungseinheit (34a) aufweist, welche zu einer Abdichtung zumindest eines Leuchtbereichs (36a) zwischen der Gehäuseeinheit (28a) und der Aufstellplatte (12a) vorgesehen ist.

9. Kochfeldvorrichtung nach Anspruch 8, **dadurch gekennzeichnet, dass** die Dichtungseinheit (34a) zumindest einen Gehäuseabschnitt der Gehäuseeinheit (28a) wenigstens abschnittsweise umschließt.

10. Kochfeldvorrichtung nach einem der vorhergehenden Ansprüche, **dadurch gekennzeichnet, dass** der Beleuchtungsstreifen (20a; 20c-e) zumindest eine weitere Leuchteinheit (38a; 38c-e) und zumindest eine Lichttrenneinheit (66a; 66c-e) aufweist, welche in dem Betriebszustand zu einer wenigstens teilweisen Trennung von Lichtanteilen aus der Leuchteinheit (22a; 22c-e) und von Lichtanteilen aus der weiteren Leuchteinheit (38a; 38c-e) vorgesehen ist.

11. Kochfeldvorrichtung nach einem der vorhergehenden Ansprüche, **dadurch gekennzeichnet, dass** der Beleuchtungsstreifen (20a) zumindest ein Freihalteelement (72a) aufweist, welches bei einer Montage zu einer Verhinderung eines Eindringens zumindest eines Objekts in zumindest einen wenigstens teilweise von dem Beleuchtungsstreifen (20a) definierten Leuchtbereich (36a) vorgesehen ist.

12. Kochfeldvorrichtung zumindest nach den Ansprüchen 4 und 11, **dadurch gekennzeichnet, dass** der Beleuchtungsstreifen (20a-e) zumindest ein Befestigungselement (44a-e) aufweist, welches zu einer Befestigung der Gehäuseeinheit (28a-e) an einem Kochfeldgehäuseboden (46a-e) der Kochfeldaußengehäuseeinheit (40a-e) vorgesehen ist.

13. Kochfeld, insbesondere Induktionskochfeld, mit zumindest einer Kochfeldvorrichtung (10a-e) nach einem der vorhergehenden Ansprüche.

14. Verfahren zu einem Betrieb einer Kochfeldvorrichtung (10a-e) nach einem der Ansprüche 1 bis 12, wobei zumindest zwei Heizeinheiten (16a-e) mittels eines einzigen Beleuchtungsstreifens (20a-e) markiert werden **dadurch gekennzeichnet, dass** der Beleuchtungsstreifen (20a-e) zumindest eine Leuchteinheit (22a-e) aufweist und in wenigstens einem Betriebszustand bezüglich zumindest einer Richtung (18a-e) zumindest eine sich in der Richtung (18a-e) verändernde Heizleistung anzeigt.

## Claims

1. Hob device, in particular induction hob device, with at least one placement plate (12a-e), which is provided for a placement of at least one item of cookware (14a-e), with at least two heating units (16a-e) for heating the item of cookware (14a-e) and with at least one illumination strip (20a-e), wherein the illumination strip (20a-e) has at least one lighting unit (22a-e) and in at least one operating state is assigned to the at least two heating units (16a-e) for marking the at least two heating units (16a-e), **characterised in that** the illumination strip (20a-e) in at least one operating state indicates, in relation to at least one direction (18a-e), at least one heating output which varies in the direction (18a-e).

2. Hob device at least according to the precharacterising clause of claim 1 and in particular according to claim 1, **characterised in that** the illumination strip (20a-e) has a longitudinal extension (24a-e) of at least 200 mm.

3. Hob device according to one of the preceding claims, **characterised in that** the illumination strip (20a-e) extends at least substantially over an entire depth extension (26a-e) of the placement plate (12a-e).

4. Hob device according to one of the preceding claims, **characterised in that** the illumination strip (20a-e) has at least one housing unit (28a-e), within which the lighting unit (22a-e) is at least largely arranged.

5. Hob device according to claim 4, **characterised in that** the illumination strip (20a-e) has at least one circuit board (30a-e), which is arranged at least largely within the housing unit (28a-e) and on which the lighting unit (22a-e) is arranged.

6. Hob device according to one of the preceding claims, **characterised in that** the illumination strip (20a-e) has at least one diffusion unit (32a-e), which is provided for scattering light emitted by the lighting unit (22a-e).

7. Hob device at least according to claims 4 and 6, **characterised in that** the diffusion unit (32a-e) is arranged on the housing unit (28a-e).

8. Hob device at least according to claim 4, **characterised in that** the illumination strip (20a) has at least one seal unit (34a), which is provided for sealing off at least one lighting region (36a) between the housing unit (28a) and the placement plate (12a).

9. Hob device according to claim 8, **characterised in that** the seal unit (34a) encloses at least one housing section of the housing unit (28a), at least in sections.

10. Hob device according to one of the preceding claims, **characterised in that** the illumination strip (20a; 20c-e) has at least one further lighting unit (38a; 38c-e) and at least one light separating unit (66a; 66c-e), which in the operating state is provided for at least partially separating light portions from the lighting unit (22a; 22c-e) and light portions from the further lighting unit (38a; 38c-e).

11. Hob device according to one of the preceding claims, **characterised in that** the illumination strip (20a) has at least one keep-clear element (72a), which is provided for preventing a penetration of at least one object into at least one lighting region (36a) at least partially defined by the illumination strip (20a) during assembly.

12. Hob device at least according to one of claims 4 and 11, **characterised in that** the illumination strip (20a-e) has at least one fastening element (44a-e), which is provided for fastening the housing unit (28a-e) to a hob housing base (46a-e) of the hob outer housing unit (40a-e).

13. Hob, in particular induction hob, with at least one hob device (10a-e) according to one of the preceding claims.

14. Method for operating a hob device (10a-e) according to one of claims 1 to 12, wherein at least two heating units (16a-e) are marked by means of a single illumination strip (20a-e), **characterised in that** the illumination strip (20a-e) has at least one lighting unit (22a-e) and in at least one operating state indicates, in relation to at least one direction (18a-e), at least one heating output which varies in the direction (18a-e).

## Revendications

1. Dispositif de champ de cuisson, en particulier dispositif de champ de cuisson à induction, avec au moins une plaque d'appui (12a-e), prévue pour l'appui d'au moins un élément de batterie de cuisine (14a-e), avec au moins deux unités de chauffe (16a-e) pour le chauffage de l'élément de batterie de cuisine (14a-e) et avec au moins une bande d'éclairage (20a-e), dans lequel la bande d'éclairage (20a-e) présente au moins une unité d'éclairage (22a-e) et est affectée aux au moins deux unités de chauffe (16a-e) dans au moins un état de fonctionnement pour un marquage des au moins deux unités de chauffe (16a-e), **caractérisé en ce que** la bande d'éclairage (20a-e) présente dans au moins un état de fonctionnement par rapport à au moins une direction (18a-e) au moins une puissance de chauffage qui varie dans la direction (18a-e).

2. Dispositif de champ de cuisson au moins selon le préambule de la revendication 1 et en particulier selon la revendication 1, **caractérisé en ce que** la bande d'éclairage (20a-e) présente une étendue longitudinale (24a-e) d'au moins 200 mm.

3. Dispositif de champ de cuisson selon l'une des revendications précédentes, **caractérisé en ce que** la bande d'éclairage (20a-e) s'étend au moins essentiellement sur une étendue de profondeur complète (26a-e) de la plaque d'appui (12a-e).

4. Dispositif de champ de cuisson selon l'une des revendications précédentes, **caractérisé en ce que** la bande d'éclairage (20a-e) présente au moins une unité de carcasse (28a-e) à l'intérieur de laquelle l'unité d'éclairage (22a-e) est au moins en grande partie disposée.

5. Dispositif de champ de cuisson selon la revendication 4, **caractérisé en ce que** la bande d'éclairage (20a-e) présente au moins un circuit imprimé (30a-e), lequel est au moins en grande partie disposé à l'intérieur de l'unité de carcasse (28a-e) et sur lequel l'unité d'éclairage (22a-e) est disposée.

6. Dispositif de champ de cuisson selon l'une des revendications précédentes, **caractérisé en ce que** la bande d'éclairage (20a-e) présente au moins une unité de diffusion (32a-e) prévue pour une diffusion de la lumière que l'unité d'éclairage (22a-e) émet.

7. Dispositif de champ de cuisson au moins selon les revendications 4 et 6, **caractérisé en ce que** l'unité de diffusion (32a-e) est disposée sur l'unité de carcasse (28a-e).

8. Dispositif de champ de cuisson selon la revendication 4, **caractérisé en ce que** la bande d'éclairage (20a) présente au moins une unité d'étanchéité (34a), prévue pour une étanchéification d'au moins une zone d'éclairage (36a) entre l'unité de carcasse (28a) et la plaque d'appui (12a).

9. Dispositif de champ de cuisson selon la revendication 8, **caractérisé en ce que** l'unité d'étanchéité (34a) entoure au moins par sections au moins une section de carcasse de l'unité de carcasse (28a).

10. Dispositif de champ de cuisson selon l'une des revendications précédentes, **caractérisé en ce que** la bande d'éclairage (20a ; 20c-e) présente au moins une unité d'éclairage supplémentaire (38a ; 38c-e) et au moins une unité de séparation de la lumière (66a ; 66c-e), prévue pour une séparation au moins partielle, à l'état de fonctionnement, de parts de lumière issues de l'unité d'éclairage (22a ; 22c-e) et de parts de lumière issues de l'unité d'éclairage supplémentaire (38a ; 38c-e).

11. Dispositif de champ de cuisson selon l'une des revendications précédentes, **caractérisé en ce que** la bande d'éclairage (20a) présente au moins un élément de dégagement (72a) prévu afin d'empêcher, lors d'un montage, la pénétration d'au moins un objet dans au moins une zone d'éclairage (36a) au moins partiellement définie par la bande d'éclairage (20a).

12. Dispositif de champ de cuisson au moins selon les revendications 4 et 11, **caractérisé en ce que** la bande d'éclairage (20a-e) présente au moins un élément de fixation (44a-e) prévu pour une fixation de l'unité de carcasse (28a-e) à un fond de carcasse de champ de cuisson (46a-e) de l'unité de carcasse extérieure de champ de cuisson (40a-e).

13. Champ de cuisson, en particulier champ de cuisson à induction, avec au moins un dispositif de champ de cuisson (10a-e) selon l'une des revendications précédentes.

14. Procédé pour une exploitation d'un dispositif de champ de cuisson (10a-e) selon l'une des revendications 1 à 12, dans lequel au moins deux unités de chauffe (16a-e) sont marquées au moyen d'une seule bande d'éclairage (20a-e), **caractérisé en ce que** la bande d'éclairage (20a-e) présente au moins une unité d'éclairage (22a-e) et présente dans au moins un état de fonctionnement par rapport à au moins une direction (18a-e) au moins une puissance de chauffage qui varie dans la direction (18a-e).
